# EUROPEAN PATENT APPLICATION

(11) **EP 4 661 369 A1**
(43) Date of publication of application: **10.12.2025**
(21) Application number: 23922481.9
(22) Date of filing: 12.12.2023
(51) Int. Cl.: H04L 61/00

(54) **COMMUNICATION METHOD AND APPARATUS**

(30) Priority: 17.02.2023 CN 202310189206
(71) Applicant: Huawei Technologies Co., Ltd., Shenzhen, Guangdong 518129 (CN)
(72) Inventor: PAN, Xiaodan, Shenzhen, Guangdong 518129 (CN); PENG, Wenjie, Shenzhen, Guangdong 518129 (CN); WANG, Rui, Shenzhen, Guangdong 518129 (CN)
(74) Representative: Pfenning, Meinig & Partner mbB
(86) International application number: PCT/CN2023/138164
(87) International publication number: WO 2024/169365

(57) **Abstract**

Embodiments of this application provide a communication method and apparatus, to avoid a data packet loss caused by asynchronous time of updating local IDs by remote UE and relay UE. This can be applied to a U2N or multipath relay communication system. The method includes: A relay terminal device receives first configuration information from a network device. The first configuration information includes a first local identifier and a first identifier, the first local identifier is an identifier that is allocated by the network device and that identifies a remote terminal device, the first identifier is an identifier that is allocated by the remote terminal device and that identifies the remote terminal device, and the remote terminal device communicates with the network device via the relay terminal device. The relay terminal device receives a first data packet based on the first identifier, and processes the first data packet based on the first configuration information. The first data packet carries a second local identifier, and the second local identifier is an identifier that is configured by the network device for the remote terminal device and that identifies the remote terminal device.

## Description

### COMMUNICATION METHOD AND APPARATUS

This application claims priority to Chinese Patent Application No. 202310189206.2, filed with the China National Intellectual Property Administration on February 17, 2023 and entitled "COMMUNICATION METHOD AND APPARATUS", which is incorporated herein by reference in its entirety.

### TECHNICAL FIELD

Embodiments of this application relate to the communication field, and in particular, to a communication method and apparatus.

### BACKGROUND

In the 3rd generation partnership project (3rd generation partnership project, 3GPP), research on a new radio (new radio, NR) sidelink relay (sidelink relay) technology is carried out in the protocol release 17 (Release 17, Rel17/R17), and a UE-to-network relay (UE-to-network relay, U2N Relay) technology is introduced. When quality of a link between remote user equipment (user equipment, UE) and a base station deteriorates, the remote (remote) UE may select appropriate relay UE, and ensure service continuity based on the U2N relay technology. The remote UE communicates with the relay UE through a side link, a radio link control (radio link control, RLC) bearer between the remote UE and the relay UE is referred to as a PC5 relay RLC channel, the relay UE communicates with the base station through a Uu interface, and an RLC bearer between the relay UE and the base station is referred to as a Uu relay RLC channel.

In a process of communication between the remote UE and the base station, the base station performs sidelink relay adaptation protocol (sidelink relay adaptation protocol, SRAP) configuration for the remote UE and the relay UE. The SRAP configuration includes a local (local) identifier (identifier, ID) of the remote UE, a mapping relationship between a data radio bearer (data radio bearer, DRB) identifier (ID)/signaling radio bearer (signaling radio bearer, SRB) identifier (ID) and a Uu relay RLC channel, and a mapping relationship between a DRB ID or an SRB ID and a PC5 relay RLC channel. In this way, data sent by the base station or the remote UE can be correctly forwarded via the relay UE.

Currently, the base station can update the local ID of the remote UE. The update process is as follows: The base station sends an updated local ID of the remote UE to the remote UE and the relay UE based on a radio resource control (radio resource control, RRC) reconfiguration message, where the updated local ID is included in the SRAP configuration. Correspondingly, after receiving the RRC reconfiguration message, the remote UE and the relay UE send RRC reconfiguration complete messages to the base station, to indicate that the update of the local ID is completed. However, in a process in which the base station updates the local ID, because time at which the remote UE receives the RRC reconfiguration message is inconsistent with time at which the relay UE receives the RRC reconfiguration message, a transmitted data packet may be lost.

### SUMMARY

Embodiments of this application provide a communication method and apparatus, to avoid a data packet loss caused by asynchronous time of updating local IDs by remote UE and relay UE.

To achieve the foregoing objective, this application uses the following technical solutions.

According to a first aspect, a communication method is provided. The method may be performed by a relay terminal device, or may be performed by a component of the relay terminal device, for example, a processor, a chip, or a chip system of the relay terminal device, or may be implemented by a logical module or software that can implement all or some functions of the relay terminal device. An example in which the method is performed by the relay terminal device is used for description below. The communication method includes: The relay terminal device receives first configuration information from a network device. The first configuration information includes a first local identifier and a first identifier, the first local identifier is an identifier that is allocated by the network device and that identifies a remote terminal device, the first identifier is an identifier that is allocated by the remote terminal device and that identifies the remote terminal device, and the remote terminal device communicates with the network device via the relay terminal device. The relay terminal device receives a first data packet from the remote terminal device based on the first identifier, and processes the first data packet based on the first configuration information. The first data packet carries a second local identifier, and the second local identifier is an identifier that is configured by the network device for the remote terminal device and that identifies the remote terminal device.

According to the communication method, regardless of whether the relay terminal device completes a local identifier update first or later, the relay terminal device can associate the first data packet with the first identifier, and associate the first data packet with the first configuration information corresponding to the first identifier to process the first data packet from the remote terminal device, to avoid a data packet loss caused by asynchronous updates of the local identities of the remote terminal device and the relay terminal device, thereby improving data transmission reliability.

In a possible design solution, that the relay terminal device processes the first data packet based on the first configuration information may include: The relay terminal device replaces the second local identifier carried in the first data packet with the first local identifier, and performs error handling on the first data packet based on the first configuration information. Alternatively, the relay terminal device replaces the first local identifier in the first configuration information with the second local identifier, and performs error handling on the first data packet based on the first configuration information. Based on any error handling manner in this design solution, this can avoid a problem that due to the asynchronous updates of the local identities, the relay terminal device incorrectly discards a data packet when matching the local identifier carried in the first data packet with information in the configuration information, thereby improving the data transmission reliability.

In a possible design solution, that the relay terminal device processes the first data packet based on the first configuration information may include: The relay terminal device forwards the first data packet based on the first configuration information. Based on this design solution, after determining that the first data packet comes from the remote terminal device, the relay terminal device may directly forward the first data packet based on the first configuration information, and does not need to identify the local identifier in the first data packet.

In a possible design solution, the method provided in embodiments of this application may further include: The relay terminal device receives first indication information from the remote terminal device. The first indication information indicates that the remote terminal device has completed the local identifier update.

In a possible design solution, the first indication information may include a second local identifier.

In a possible design solution, that the relay terminal device processes the first data packet based on the first configuration information specifically includes: After receiving the first indication information, the relay terminal device processes the first data packet based on the first configuration information.

In a possible design solution, the method provided in embodiments of this application may further include: The relay terminal device receives second configuration information from the network device. The second configuration information includes the second local identifier and the first identifier. The relay terminal device sends second indication information to the remote terminal device based on the second configuration information. The second indication information indicates that the relay terminal device has completed the local identifier update.

In a possible design solution, the second indication information may include the second local identifier.

In a possible design solution, the method provided in embodiments of this application may further include: The relay terminal device stops, based on the second configuration information, an operation of processing the first data packet based on the first configuration information.

In a possible design solution, the method provided in embodiments of this application may further include: The relay terminal device sends second indication information to the remote terminal device based on the first configuration information. The second indication information indicates that the relay terminal device has completed the local identifier update.

In a possible design solution, the second indication information may include the first local identifier.

In a possible design solution, the first indication information may include the first local identifier.

In a possible design solution, the method provided in embodiments of this application may further include: After receiving the first indication information, the relay terminal device performs error handling and forwarding on the first data packet based on the first configuration information.

According to a second aspect, a communication method is provided. The method may be performed by a remote terminal device, or may be performed by a component of the remote terminal device, for example, a processor, a chip, or a chip system of the remote terminal device, or may be implemented by a logical module or software that can implement all or some functions of the remote terminal device. An example in which the method is performed by the remote terminal device is used for description below. The communication method includes: The remote terminal device receives third configuration information from a network device. The third configuration information includes a third local identifier and a first identifier, the third local identifier is an identifier that is allocated by the network device and that identifies the remote terminal device, and the first identifier is an identifier that is allocated by the remote terminal device and that identifies the remote terminal device. The remote terminal device receives a second data packet from a relay terminal device, and processes the second data packet based on the third configuration information. The second data packet carries a fourth local identifier, the fourth local identifier is an identifier that is configured by the network device for the relay terminal device and that identifies the remote terminal device, and the remote terminal device communicates with the network device via the relay terminal device.

In a possible design solution, that the remote terminal device processes the second data packet based on the third configuration information may include: The remote terminal device replaces the fourth local identifier carried in the second data packet with the third local identifier, and performs error handling on the second data packet based on the third configuration information. Alternatively, the remote terminal device replaces the third local identifier in the third configuration information with the fourth local identifier, and performs error handling on the second data packet based on the third configuration information.

In a possible design solution, that the remote terminal device processes the second data packet based on the third configuration information may include: The remote terminal device transfers the second data packet to an upper layer based on the third configuration information.

In a possible design solution, the method provided in embodiments of this application may further include: The remote terminal device receives third indication information from the relay terminal device. The third indication information indicates that the relay terminal device has completed a local identifier update.

In a possible design solution, the third indication information may include the fourth local identifier.

In a possible design solution, that the remote terminal device processes the second data packet based on the third configuration information may include: After receiving the third indication information, the remote terminal device processes the second data packet based on the third configuration information.

In a possible design solution, the method provided in embodiments of this application may further include: The remote terminal device receives fourth configuration information from the network device. The fourth configuration information includes the fourth local identifier and the first identifier. The remote terminal device sends fourth indication information to the relay terminal device based on the fourth configuration information. The fourth indication information indicates that the remote terminal device has completed a local identifier update.

In a possible design solution, the fourth indication information may include the fourth local identifier.

In a possible design solution, the method provided in embodiments of this application may further include: The remote terminal device stops, based on the fourth configuration information, an operation of processing the second data packet based on the third configuration information.

In a possible design solution, the method provided in embodiments of this application may further include: The remote terminal device sends fourth indication information to the relay terminal device based on the third configuration information. The fourth indication information indicates that the remote terminal device has completed a local identifier update.

In a possible design solution, the fourth indication information may include the third local identifier.

In a possible design solution, the third indication information may include the third local identifier.

In a possible design solution, the method provided in embodiments of this application may further include: After receiving the third indication information, the remote terminal device performs error handling and forwarding on the second data packet based on the third configuration information.

For technical effect of the communication method according to the second aspect, refer to the technical effect of the communication method according to the first aspect. Details are not described herein again.

According to a third aspect, a communication method is provided. The method may be performed by a relay terminal device, or may be performed by a component of the relay terminal device, for example, a processor, a chip, or a chip system of the relay terminal device, or may be implemented by a logical module or software that can implement all or some functions of the relay terminal device. An example in which the method is performed by the relay terminal device is used for description below. The communication method includes: The relay terminal device receives first configuration information from a network device. The first configuration information includes a first local identifier and a first identifier, the first local identifier is an identifier that is allocated by the network device and that identifies a remote terminal device, the first identifier is an identifier that is allocated by the remote terminal device and that identifies the remote terminal device, and the remote terminal device communicates with the network device via the relay terminal device. The relay terminal device receives a first data packet from the remote terminal device based on the first identifier. The first data packet carries a second local identifier, and the second local identifier is an identifier that is configured by the network device for the remote terminal device and that identifies the remote terminal device. The relay terminal device stores the first data packet.

In a possible design solution, the method provided in embodiments of this application may further include: The relay terminal device receives first indication information from the remote terminal device. The first indication information indicates that the remote terminal device has completed a local identifier update.

In a possible design solution, that the relay terminal device stores the first data packet may include: The relay terminal device stores the first data packet based on the first indication information.

In a possible design solution, the method provided in embodiments of this application may further include: The relay terminal device receives second configuration information from the network device. The second configuration information includes the second local identifier and the first identifier. The relay terminal device processes the first data packet based on the second configuration information.

In a possible design solution, the method provided in embodiments of this application may further include: The relay terminal device sends second indication information to the remote terminal device. The second indication information indicates that the relay terminal device has completed a local identifier update.

According to a fourth aspect, a communication method is provided. The method may be performed by a remote terminal device, or may be performed by a component of the remote terminal device, for example, a processor, a chip, or a chip system of the remote terminal device, or may be implemented by a logical module or software that can implement all or some functions of the remote terminal device. An example in which the method is performed by the remote terminal device is used for description below. The communication method includes: The remote terminal device receives third configuration information from a network device. The third configuration information includes a third local identifier and a first identifier, the third local identifier is an identifier that is allocated by the network device and that identifies a remote terminal device, the first identifier is an identifier that is allocated by the remote terminal device and that identifies the remote terminal device, and the remote terminal device communicates with the network device via a relay terminal device. The remote terminal device receives a second data packet from the relay terminal device. The second data packet carries a fourth local identifier, and the fourth local identifier is an identifier that is configured by the network device for the relay terminal device and that identifies the remote terminal device. The remote terminal device stores the second data packet.

In a possible design solution, the method provided in embodiments of this application may further include: The remote terminal device receives third indication information from the relay terminal device. The third indication information indicates that the relay terminal device has completed a local identifier update.

In a possible design solution, that the relay terminal device stores the second data packet may include: The remote terminal device stores the first data packet based on the third indication information.

In a possible design solution, the method provided in embodiments of this application may further include: The remote terminal device receives fourth configuration information from the network device. The fourth configuration information includes the fourth local identifier and the first identifier. The remote terminal device processes the second data packet based on the fourth configuration information.

In a possible design solution, the method provided in embodiments of this application may further include: The remote terminal device sends fourth indication information to the relay terminal device. The fourth indication information indicates that the remote terminal device has completed a local identifier update.

According to a fifth aspect, a communication method is provided. The method may be performed by a relay terminal device, or may be performed by a component of the relay terminal device, for example, a processor, a chip, or a chip system of the relay terminal device, or may be implemented by a logical module or software that can implement all or some functions of the relay terminal device. An example in which the method is performed by the relay terminal device is used for description below. The communication method includes: The relay terminal device receives fifth configuration information from a network device. The fifth configuration information includes a fifth local identifier. The fifth local identifier is an identifier configured by the network device to identify a remote terminal device. The relay terminal device receives first configuration information from the network device. The first configuration information includes a first local identifier, and the first configuration information indicates the relay terminal device to update the fifth local identifier to the first local identifier. The relay terminal device receives a first data packet from the remote terminal device, and processes the first data packet based on the fifth configuration information. Alternatively, the relay terminal device sends the second data packet to the remote terminal device based on the fifth configuration information.

In a possible design solution, the method provided in embodiments of this application may further include: The relay terminal device receives first indication information from the remote terminal device. The first indication information indicates that the remote terminal device has completed a local identifier update.

In a possible design solution, the method provided in embodiments of this application may further include: The relay terminal device sends second indication information to the remote terminal device. The second indication information indicates that the relay terminal device has completed a local identifier update.

In a possible design solution, the method provided in embodiments of this application may further include: When receiving the first configuration information, the relay terminal device triggers sending of the second indication information to the remote terminal device.

In a possible design solution, the method provided in embodiments of this application may further include: After receiving the first indication information, the relay terminal device releases the fifth configuration information.

In a possible design solution, the method provided in embodiments of this application may further include: After releasing the fifth configuration information, the relay terminal device sends the second data packet to the remote terminal device based on the first configuration information. The second data packet carries the first local identifier. Alternatively, after releasing the fifth configuration information, the relay terminal device processes the first data packet from the remote terminal device based on the first configuration information.

According to a sixth aspect, a communication method is provided. The method may be performed by a remote terminal device, or may be performed by a component of the remote terminal device, for example, a processor, a chip, or a chip system of the remote terminal device, or may be implemented by a logical module or software that can implement all or some functions of the remote terminal device. An example in which the method is performed by the remote terminal device is used for description below. The communication method includes: The remote terminal device receives sixth configuration information from a network device. The sixth configuration information includes a sixth local identifier. The sixth local identifier is an identifier configured by the network device to identify the remote terminal device. The remote terminal device receives third configuration information from the network device. The third configuration information includes a third local identifier, and the third configuration information indicates the remote terminal device to update the sixth local identifier to the third local identifier. The remote terminal device sends a first data packet to the relay terminal device based on the sixth configuration information. The first data packet carries the sixth local identifier. Alternatively, the remote terminal device receives a second data packet from the relay terminal device, and processes the second data packet based on the sixth configuration information.

In a possible design solution, the method provided in embodiments of this application may further include: The remote terminal device receives third indication information from the relay terminal device. The third indication information indicates that the relay terminal device has completed a local identifier update.

In a possible design solution, the method provided in embodiments of this application may further include: The remote terminal device sends fourth indication information to the relay terminal device. The fourth indication information indicates that the remote terminal device has completed a local identifier update.

In a possible design solution, the method provided in embodiments of this application may further include: When receiving the third configuration information, the remote terminal device triggers sending of the fourth indication information to the relay terminal device.

In a possible design solution, the method provided in embodiments of this application may further include: After receiving the third indication information, the remote terminal device releases the sixth configuration information.

In a possible design solution, the method provided in embodiments of this application may further include: After releasing the sixth configuration information, the remote terminal device sends the first data packet to the relay terminal device based on the third configuration information. The first data packet carries the third local identifier. Alternatively, after releasing the sixth configuration information, the remote terminal device processes the second data packet from the relay terminal device based on the third configuration information.

According to a seventh aspect, a communication method is provided. The method may be performed by a relay terminal device, or may be performed by a component of the relay terminal device, for example, a processor, a chip, or a chip system of the relay terminal device, or may be implemented by a logical module or software that can implement all or some functions of the relay terminal device. An example in which the method is performed by the relay terminal device is used for description below. The communication method includes: The relay terminal device receives fifth configuration information from a network device. The fifth configuration information includes a fifth local identifier. The fifth local identifier is an identifier configured by the network device to identify a remote terminal device. The relay terminal device receives first configuration information from the network device. The first configuration information includes a first local identifier, and the first configuration information indicates the relay terminal device to update the fifth local identifier to the first local identifier. The relay terminal device processes a first data packet from the remote terminal device based on the first configuration information and the fifth configuration information.

In a possible design solution, that the relay terminal device sends a second data packet to the remote terminal device based on the first configuration information and the fifth configuration information may include: The relay terminal device replicates the second data packet, and separately applying the first configuration information and the fifth configuration information to send the replicated second data packet to the remote terminal device.

In a possible design solution, that the relay terminal device processes the first data packet from the remote terminal device based on the first configuration information and the fifth configuration information may include: When a local identifier carried in the first data packet is the fifth local identifier, the relay terminal device processes the first data packet from the remote terminal device based on the fifth configuration information. Alternatively, when a local identifier carried in the first data packet is the first local identifier, the relay terminal device processes the first data packet from the remote terminal device based on the first configuration information.

In a possible design solution, that the relay terminal device processes the first data packet from the remote terminal device based on the first configuration information and the fifth configuration information may include: The relay terminal device starts a first timer based on the first configuration information, and processes the first data packet from the remote terminal device within first timing duration of the first timer based on the first configuration information and the fifth configuration information.

In a possible design solution, the method provided in embodiments of this application may further include: The relay terminal device receives first indication information from the remote terminal device. The first indication information indicates that the remote terminal device has completed a local identifier update.

In a possible design solution, the method provided in embodiments of this application may further include: The relay terminal device releases the fifth configuration information based on the first indication information. The relay terminal device processes the first data packet from the remote terminal device based on the first configuration information.

In a possible design solution, the method provided in embodiments of this application may further include: The relay terminal device releases the fifth configuration information based on the first indication information. The relay terminal device sends the second data packet to the remote terminal device based on the first configuration information.

In a possible design solution, the method provided in embodiments of this application may further include: After the first timer reaches the first timing duration, the relay terminal device releases the fifth configuration information. The relay terminal device processes the first data packet from the remote terminal device based on the first configuration information.

In a possible design solution, the method provided in embodiments of this application may further include: After the first timer reaches the first timing duration, the relay terminal device releases the fifth configuration information. The relay terminal device sends the second data packet to the remote terminal device based on the first configuration information.

In a possible design solution, the first timing duration is duration preset by the relay terminal device, or the first timing duration is duration configured by the network device for the relay terminal device, or the first timing duration is duration negotiated by the remote terminal device and the relay terminal device.

According to an eighth aspect, a communication method is provided. The method may be performed by a remote terminal device, or may be performed by a component of the remote terminal device, for example, a processor, a chip, or a chip system of the remote terminal device, or may be implemented by a logical module or software that can implement all or some functions of the remote terminal device. An example in which the method is performed by the remote terminal device is used for description below. The communication method includes: The remote terminal device receives sixth configuration information from a network device. The sixth configuration information includes a sixth local identifier. The sixth local identifier is an identifier configured by the network device to identify the remote terminal device. The remote terminal device receives third configuration information from the network device. The third configuration information includes a third local identifier, and the third configuration information indicates the remote terminal device to update the sixth local identifier to the third local identifier. The remote terminal device processes a second data packet from the relay terminal device based on the third configuration information and the sixth configuration information.

In a possible design solution, that the remote terminal device sends a first data packet to the relay terminal device based on the third configuration information and the sixth configuration information may include: The remote terminal device replicates the first data packet, and separately applying the third configuration information and the sixth configuration information to send the replicated first data packet to the relay terminal device.

In a possible design solution, that the remote terminal device processes the second data packet from the relay terminal device based on the third configuration information and the sixth configuration information may include: When a local identifier carried in the second data packet is the sixth local identifier, the remote terminal device processes the first data packet from the relay terminal device based on the sixth configuration information. Alternatively, when a local identifier carried in the second data packet is the third local identifier, the remote terminal device processes the second data packet from the relay terminal device based on the third configuration information.

In a possible design solution, that the remote terminal device processes the second data packet from the relay terminal device based on the third configuration information and the sixth configuration information may include: The remote terminal device starts a second timer based on the third configuration information, and processes the second data packet from the relay terminal device within second timing duration of the second timer based on the third configuration information and the sixth configuration information.

In a possible design solution, the method provided in embodiments of this application may further include: The remote terminal device receives third indication information from the relay terminal device. The third indication information indicates that the relay terminal device has completed a local identifier update.

In a possible design solution, the method provided in embodiments of this application may further include: The remote terminal device releases the sixth configuration information based on the third indication information. The remote terminal device processes the second data packet from the relay terminal device based on the third configuration information.

In a possible design solution, the method provided in embodiments of this application may further include: The remote terminal device releases the sixth configuration information based on the third indication information. The remote terminal device sends the first data packet to the relay terminal device based on the third configuration information.

In a possible design solution, the method provided in embodiments of this application may further include: After the second timer reaches the second timing duration, the remote terminal device releases the sixth configuration information. The remote terminal device processes the second data packet from the relay terminal device based on the third configuration information.

In a possible design solution, the method provided in embodiments of this application may further include: After the second timer reaches the second timing duration, the remote terminal device releases the sixth configuration information. The remote terminal device sends the first data packet to the relay terminal device based on the third configuration information.

In a possible design solution, the second timing duration is duration preset by the remote terminal device, or the second timing duration is duration configured by the network device for the remote terminal device, or the second timing duration is duration negotiated by the remote terminal device and the relay terminal device.

According to a ninth aspect, a communication method is provided. The method may be performed by a remote terminal device, or may be performed by a component of the remote terminal device, for example, a processor, a chip, or a chip system of the remote terminal device, or may be implemented by a logical module or software that can implement all or some functions of the remote terminal device. An example in which the method is performed by the remote terminal device is used for description below. The communication method includes: The remote terminal device completes an update of configuration information corresponding to a first identifier, and determines that a relay terminal device completes the update of the configuration information corresponding to the first identifier. The first identifier is an identifier that is allocated by the remote terminal device and that identifies the remote terminal device. The remote terminal device sends first information to the network device. The first information is used to trigger the network device to retransmit a lost downlink data packet.

According to a tenth aspect, a communication method is provided. The method may be performed by a network device, or may be performed by a component of the network device, for example, a processor, a chip, or a chip system of the network device, or may be implemented by a logical module or software that can implement all or some functions of the network device. An example in which the method is performed by the network device is used for description below. The communication method includes: The network device determines that a remote terminal device completes an update of configuration information corresponding to a first identifier, and determines that a relay terminal device completes the update of the configuration information corresponding to the first identifier. The first identifier is an identifier that is allocated by the remote terminal device and that identifies the remote terminal device. The network device sends second information to the remote terminal device. The second information is used to trigger the remote terminal device to retransmit a lost uplink data packet.

According to an eleventh aspect, a communication apparatus is provided, and is configured to implement the foregoing methods. The communication apparatus may be the relay terminal device in the first aspect, an apparatus including the relay terminal device, or an apparatus, for example, a chip, that is included in the relay terminal device. The communication apparatus includes a corresponding module, unit, or means (means) for implementing the method according to the first aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The transceiver module is configured to receive first configuration information from a network device. The first configuration information includes a first local identifier and a first identifier, the first local identifier is an identifier that is allocated by the network device and that identifies a remote terminal device, the first identifier is an identifier that is allocated by the remote terminal device and that identifies the remote terminal device, and the remote terminal device communicates with the network device via the relay terminal device. The transceiver module is further configured to receive a first data packet from the remote terminal device based on the first identifier. The processing module is configured to process the first data packet based on the first configuration information. The first data packet carries a second local identifier, and the second local identifier is an identifier that is configured by the network device for the remote terminal device and that identifies the remote terminal device.

In a possible design solution, that the processing module is configured to process the first data packet based on the first configuration information specifically includes: The processing module is configured to: replace the second local identifier carried in the first data packet with the first local identifier, and perform error handling on the first data packet based on the first configuration information; or replace the first local identifier in the first configuration information with the second local identifier, and perform error handling on the first data packet based on the first configuration information.

In a possible design solution, that the processing module is configured to process the first data packet based on the first configuration information specifically includes: The processing module is configured to forward the first data packet based on the first configuration information.

In a possible design solution, the method provided in embodiments of this application may further include: The transceiver module is further configured to receive first indication information from the remote terminal device. The first indication information indicates that the remote terminal device has completed a local identifier update.

In a possible design solution, the first indication information may include a second local identifier.

In a possible design solution, that the processing module is configured to process the first data packet based on the first configuration information specifically includes: The processing module is configured to: after receiving the first indication information, process the first data packet based on the first configuration information.

In a possible design solution, the transceiver module is further configured to receive second configuration information from the network device. The second configuration information includes the second local identifier and the first identifier. The transceiver module is further configured to send second indication information to the remote terminal device based on the second configuration information. The second indication information indicates that the relay terminal device has completed a local identifier update.

In a possible design solution, the second indication information may include the second local identifier.

In a possible design solution, the processing module is further configured to stop, based on the second configuration information, an operation of processing the first data packet based on the first configuration information.

In a possible design solution, the transceiver module is further configured to send second indication information to the remote terminal device based on the first configuration information. The second indication information indicates that the relay terminal device has completed a local identifier update.

In a possible design solution, the second indication information may include the first local identifier.

In a possible design solution, the first indication information may include the first local identifier.

In a possible design solution, the processing module is further configured to: after receiving the first indication information, perform error handling and forwarding on the first data packet based on the first configuration information.

In a possible design solution, the transceiver module may include a receiving module and a sending module. The sending module is configured to implement a sending function of the communication apparatus according to the eleventh aspect, and the receiving module is configured to implement a receiving function of the communication apparatus according to the eleventh aspect.

In a possible design solution, the communication apparatus according to the eleventh aspect may further include a storage module, and the storage module stores a program or instructions. When the processing module executes the program or the instructions, the communication apparatus according to the eleventh aspect is enabled to perform the communication method according to the first aspect.

For technical effect of the communication apparatus according to the eleventh aspect, refer to the technical effect of the communication method according to the first aspect. Details are not described herein again.

According to a twelfth aspect, a communication apparatus is provided, and is configured to implement the foregoing methods. The communication apparatus may be the remote terminal device in the second aspect, an apparatus including the remote terminal device, or an apparatus, for example, a chip, that is included in the remote terminal device. The communication apparatus includes a corresponding module, unit, or means (means) for implementing the method according to the second aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The transceiver module is configured to receive third configuration information from a network device. The third configuration information includes a third local identifier and a first identifier, the third local identifier is an identifier that is allocated by the network device and that identifies the remote terminal device, and the first identifier is an identifier that is allocated by the remote terminal device and that identifies the remote terminal device. The transceiver module is further configured to receive a second data packet from a relay terminal device. The processing module is configured to process the second data packet based on the third configuration information. The second data packet carries a fourth local identifier, the fourth local identifier is an identifier that is configured by the network device for the relay terminal device and that identifies the remote terminal device, and the remote terminal device communicates with the network device via the relay terminal device.

In a possible design solution, that the processing module is configured to process the second data packet based on the third configuration information specifically includes: The processing module is configured to: replace the fourth local identifier carried in the second data packet with the third local identifier, and perform error handling on the second data packet based on the third configuration information; or replace the third local identifier in the third configuration information with the fourth local identifier, and perform error handling on the second data packet based on the third configuration information.

In a possible design solution, that the processing module is configured to process the second data packet based on the third configuration information specifically includes: The processing module is configured to transfer the second data packet based on the third configuration information.

In a possible design solution, the transceiver module is further configured to receive third indication information from the relay terminal device. The third indication information indicates that the relay terminal device has completed a local identifier update.

In a possible design solution, the third indication information may include the fourth local identifier.

In a possible design solution, that the processing module is configured to process the second data packet based on the third configuration information specifically includes: The processing module is configured to: after receiving the third indication information, process the second data packet based on the third configuration information.

In a possible design solution, the transceiver module is further configured to receive fourth configuration information from the network device. The fourth configuration information includes the fourth local identifier and the first identifier. The transceiver module is further configured to send fourth indication information to the relay terminal device based on the fourth configuration information. The fourth indication information indicates that the remote terminal device has completed a local identifier update.

In a possible design solution, the fourth indication information may include the fourth local identifier.

In a possible design solution, the processing module is further configured to stop, based on the fourth configuration information, an operation of processing the second data packet based on the third configuration information.

In a possible design solution, the transceiver module is further configured to send fourth indication information to the relay terminal device based on the third configuration information. The fourth indication information indicates that the remote terminal device has completed a local identifier update.

In a possible design solution, the fourth indication information may include the third local identifier.

In a possible design solution, the third indication information may include the third local identifier.

In a possible design solution, the processing module is further configured to: after receiving the third indication information, perform error handling and forwarding on the second data packet based on the third configuration information.

In a possible design solution, the transceiver module may include a receiving module and a sending module. The sending module is configured to implement a sending function of the communication apparatus according to the twelfth aspect, and the receiving module is configured to implement a receiving function of the communication apparatus according to the twelfth aspect.

In a possible design solution, the communication apparatus according to the twelfth aspect may further include a storage module, and the storage module stores a program or instructions. When the processing module executes the program or the instructions, the communication apparatus according to the twelfth aspect is enabled to perform the communication method according to the second aspect.

For technical effect of the communication apparatus according to the twelfth aspect, refer to the technical effect of the communication method according to the second aspect. Details are not described herein again.

According to a thirteenth aspect, a communication apparatus is provided, including a processor and a communication interface. The communication interface is configured to communicate with a module other than the communication apparatus. The processor is configured to execute a computer program or instructions, to enable the communication apparatus to perform the method according to any one of the first aspect to the tenth aspect.

According to a fourteenth aspect, a communication apparatus is provided, including at least one processor. The processor is configured to execute a computer program or instructions stored in a memory, to enable the communication apparatus to perform the method according to any one of the first aspect to the tenth aspect. The memory may be coupled to the processor, or may be independent of the processor.

According to a fifteenth aspect, a communication apparatus is provided (for example, the communication apparatus may be a chip or a chip system). The communication apparatus includes a processor, configured to implement functions in any one of the first aspect to the tenth aspect.

In some possible designs, the communication apparatus includes a memory, and the memory is configured to store necessary program instructions and/or data.

In a possible design solution, the processor and the memory may be integrated.

In some possible designs, when the apparatus is the chip system, the apparatus may include a chip, or may include the chip and another discrete component.

It should be understood that the thirteenth aspect to the fifteenth aspect include a corresponding module, unit, or means (means) for implementing the method according to any one of the first aspect to the tenth aspect. The module, unit, or means may be implemented by hardware, software, or hardware executing corresponding software. The hardware or the software includes one or more modules or units configured to perform functions in the foregoing methods.

It may be understood that, when the communication apparatus according to any one of the thirteenth aspect to the fifteenth aspect is a chip, the sending action/function may be understood as an output, and the receiving action/function may be understood as an input.

According to a sixteenth aspect, a computer-readable storage medium is provided. The computer-readable storage medium stores a computer program or instructions. When the computer program or the instructions are run on a communication apparatus, the communication apparatus is enabled to perform the method according to any one of the first aspect to the tenth aspect.

According to a seventeenth aspect, a computer program product including instructions is provided. When the computer program product runs on a communication apparatus, the communication apparatus is enabled to perform the method according to any one of the first aspect to the tenth aspect.

According to an eighteenth aspect, a communication system is provided, including the relay terminal device according to the first aspect, the third aspect, or the fifth aspect and the remote terminal device according to the second aspect, the fourth aspect, the sixth aspect, or the eighth aspect.

### BRIEF DESCRIPTION OF DRAWINGS

FIG. 1 is a diagram of architectures of control plane protocol stacks and user plane protocol stacks that are used for communication between UE 1 and UE 2 according to an embodiment of this application;
FIG. 2 is a diagram of an architecture of U2N relay communication according to an embodiment of this application;
FIG. 3 is a diagram of architectures of control plane protocol stacks and user plane protocol stacks between remote UE, relay UE, and a base station according to an embodiment of this application;
FIG. 4 is a diagram of a structure of an SRAP PDU according to an embodiment of this application;
FIG. 5 is a diagram of an architecture of multi-path relay communication according to an embodiment of this application;
FIG. 6 is a diagram of an architecture of protocol stacks between remote UE, relay UE, and a base station in a multi-path relay communication scenario according to an embodiment of this application;
FIG. 7 is a schematic flowchart of updating a local ID according to an embodiment of this application;
FIG. 8 is a diagram of an architecture of a communication system according to an embodiment of this application;
FIG. 9a is a schematic flowchart of a communication method according to an embodiment of this application;
FIG. 9b is a schematic flowchart of another communication method according to an embodiment of this application;
FIG. 9c is a schematic flowchart of still another communication method according to an embodiment of this application;
FIG. 10a is a schematic flowchart of still another communication method according to an embodiment of this application;
FIG. 10b is a schematic flowchart of still another communication method according to an embodiment of this application;
FIG. 10c is a schematic flowchart of still another communication method according to an embodiment of this application;
FIG. 11 is a schematic flowchart of still another communication method according to an embodiment of this application;
FIG. 12 is a schematic flowchart of still another communication method according to an embodiment of this application;
FIG. 13 is a diagram of an architecture of multi-hop SL relay communication according to an embodiment of this application;
FIG. 14 is a diagram of a structure of a communication apparatus according to an embodiment of this application; and
FIG. 15 is a diagram of a structure of another communication apparatus according to an embodiment of this application.

### DESCRIPTION OF EMBODIMENTS

To better understand embodiments of this application, the following several items are described before embodiments of this application.
1. In embodiments of this application, "indicate" may include "directly indicate" and "indirectly indicate". When a piece of "indication information" is described as indicating A, the indication information may directly indicate A or indirectly indicate A, but it does not indicate that the indication information definitely carries A.

Information indicated by indication information is referred to as to-be-indicated information. In a specific implementation process, there are a plurality of manners of indicating the to-be-indicated information, for example, but not limited to, the following manners: The to-be-indicated information may be directly indicated, for example, the to-be-indicated information or an index of the to-be-indicated information may be indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, a common part of all pieces of information may be identified and indicated in a unified manner, to reduce indication overheads caused by separately indicating same information.

In addition, specific indication manners may alternatively be various existing indication manners, for example, but not limited to, the foregoing indication manners and various combinations thereof. For details of the various indication manners, refer to the conventional technology. The details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit end device by sending configuration information to a receive end device. The configuration information may include, for example, but not limited to one or a combination of at least two of RRC signaling, medium access control (medium access control, MAC) layer signaling, and physical layer signaling. The MAC layer signaling includes, for example, a MAC control element (control element, CE). The physical (physical, PHY) layer signaling includes, for example, downlink control information (downlink control information, DCI).

2. In embodiments of this application, "first", "second", and various numerical numbers are merely used for differentiation for ease of description, but are not used to limit the scope of embodiments of this application, for example, for distinguishing between different indication information. For another example, a first network area and a second network area are merely intended to distinguish between different areas, and are not intended to limit a sequence thereof. A person skilled in the art may understand that the terms such as "first" and "second" do not limit a quantity or an execution sequence, and the terms such as "first" and "second" do not indicate a definite difference.

3. "Predefinition" or "preconfiguration" may be implemented by pre-storing corresponding code or a corresponding table in a device (for example, including a terminal device or a network device) or in another manner that can indicate related information. A specific implementation of "predefinition" or "preconfiguration" is not limited in this application. "Storage" may be storage in one or more memories. The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in this application.

4. A "protocol" in embodiments of this application may be a standard protocol in the communication field, for example, may include a long term evolution (long term evolution, LTE) protocol, a new radio (new radio, NR) protocol, and a related protocol applied to a future communication system. This is not limited in this application.

5. In embodiments of this application, "information (information)", "signal (signal)", "message (message)", "channel (channel)", and "signaling (signaling)" may be interchangeably used sometimes. It should be noted that meanings expressed by the terms are consistent when differences of the terms are not emphasized. Terms "of (of)" and "corresponding (corresponding, related)" may be interchangeably used sometimes. It should be noted that meanings expressed by the terms are consistent when differences of the terms are not emphasized.

6. In embodiments of this application, descriptions such as "when", "in a case", and "if" mean that a device (for example, a terminal device or a network device) performs corresponding processing in an objective situation, and are not intended to limit time, and the device (for example, the terminal device or the network device) is not required to perform a determining action during implementation; and do not mean any other limitation.

7. In descriptions of this application, unless otherwise specified, "/" indicates that associated objects are in an "or" relationship. For example, A/B may indicate A or B. "And/or" in this application merely describes an association relationship between the associated objects, and indicates that three relationships may exist. For example, A and/or B may indicate the following cases: Only A exists, both A and B exist, and only B exists, where A and B may be singular or plural. In addition, in the descriptions of embodiments of this application, unless otherwise specified, "a plurality of" means two or more. "At least one of the following items (pieces)" or a similar expression thereof refers to any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural. It should be understood that in embodiments of this application, sequence numbers of processes do not mean a sequence of execution. The sequence of execution of the processes should be determined according to functions and internal logic of the processes, and should not constitute any limitation on an implementation process of embodiments of this application.

In addition, in embodiments of this application, the word like "example" or "for example" is used to represent giving an example, an illustration, or a description. Any embodiment or design solution described as "example" or "for example" in embodiments of this application is not to be construed as being more preferred or advantageous than another embodiment or design solution. Exactly, use of the terms such as "example" or "for example" are intended to present a related concept in a specific manner for ease of understanding.

8. The technical solutions in embodiments of this application may be applied to various communication systems, for example, a wireless fidelity (wireless fidelity, Wi-Fi) system, a vehicle to everything (vehicle to everything, V2X) communication system, a device-to-device (device-to-device, D2D) communication system, an internet of vehicles communication system, a 4th generation (4th generation, 4G) mobile communication system, for example, a long term evolution (long term evolution, LTE) system or a worldwide interoperability for microwave access (worldwide interoperability for microwave access, WiMAX) communication system, a 5G mobile communication system, for example, an NR system, and a future communication system, for example, a 6G mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

Finally, a network architecture and a service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems.

For ease of understanding, the following first describes related technologies in embodiments of this application.

### 1. Sidelink (sidelink, SL) communication

Direct communication between one terminal device and another terminal device is referred to as sidelink communication, which can effectively reduce a communication delay and improve communication efficiency. A communication interface between the two terminal devices is a PC5 interface, and a link between the two terminal devices is referred to as a sidelink. A terminal device that performs communication through a sidelink may be within network coverage, and may be in any RRC state (including an RRC connected state, an RRC idle state, or an RRC inactive state); or may be outside network coverage.

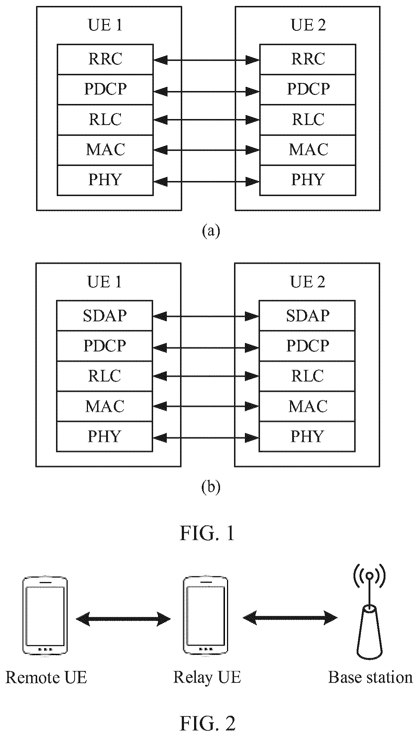

For two terminal devices that perform sidelink communication, communication between user equipment (user equipment, UE) 1 and UE 2 is used as an example. An architecture of control plane protocol stacks and an architecture of user plane protocol stacks that are used by the UEs for communication are shown in FIG. 1. As shown in (a) in FIG. 1, the control plane protocol stacks of the UE 1 and the UE 2 are sequentially RRC layers, packet data convergence protocol (packet data convergence protocol, PDCP) layers, RLC layers, MAC layers, and PHY layers from top to bottom. As shown in (b) in FIG. 1, the user plane protocol stacks of the UE 1 and the UE 2 are sequentially service data adaptation protocol (Service Data Adaptation Protocol, SDAP) layers, PDCP layers, RLC layers, MAC layers, and PHY layers from top to bottom.

The sidelink communication supports three communication modes: broadcast, unicast, and multicast.

In the broadcast communication, a terminal device sends data of a broadcast service to the outside without encryption. Any other terminal device within an effective reception scope may receive the data of the broadcast service if the terminal device is interested in the broadcast service.

The multicast communication refers to communication between all terminal devices in a communication group, and any terminal device in the communication group can receive and send data of a multicast service.

In the unicast communication, a unicast connection needs to be first established between two terminal devices. After the unicast connection is established, the two terminal devices may perform data communication based on a negotiated identifier. Data may be encrypted, or may not be encrypted. In comparison with the broadcast, in the unicast communication, the unicast communication can be performed only between the two terminal devices that have established the unicast connection.

In a unicast communication process, a pair of a source (source) layer-2 identifier (layer-2 identifier, L2 ID) and a destination (destination) L2 ID are used to identify source UE and destination UE in the communication process. The source UE is a data transmit end or transmit UE (Tx UE), and the destination UE is a data receive end or receive UE (Rx UE). In view of this, each time the source UE sends a data packet, the source UE splits a 24-bit (bit) source L2 ID and a 24-bit (bit) destination L2 ID, where 8 least significant bits of the source L2 ID are submitted to the PHY layer, and 16 most significant bits are included in a subheader of a MAC protocol data unit (protocol data unit, PDU); and 16 least significant bits of the destination L2 ID are submitted to the PHY layer, and 8 most significant bits are included in a subheader of a MAC PDU. The source UE (that is, the transmit UE) sends sidelink control information (sidelink control information, SCI) including the 8 least significant bits of the source L2 ID and the 16 least significant bits of the destination L2 ID. In this way, after a receive-end UE receives the SCI, a PHY layer of the receive-end UE first filters data packets. To be specific, the PHY layer of the receive UE may exclude, based on source L2 ID and destination L2 ID information carried in the SCI, a part of data packets that are not to be received by the receive-end UE or that the receive-end UE is not interested in, and receive, on a corresponding resource based on an indication of the SCI, a data packet that is sent to the receive-end UE or that the receive-end UE is interested in.

### 2. U2N relay technology

The U2N relay technology is a technology that is introduced in the 3GPP Rel17 and that uses a sidelink relay technology to implement communication between a terminal device and a network device. For example, FIG. 2 is a diagram of an architecture of U2N relay communication. As shown in FIG. 2, a communication system includes remote (remote) UE, relay (relay) UE, and a base station. The remote UE communicates with the relay UE through a sidelink, an RLC bearer between the remote UE and the relay UE is referred to as a PC5 relay RLC channel, the relay UE communicates with the base station through a Uu interface, and an RLC bearer between the relay UE and the base station is referred to as a Uu relay RLC channel.

Currently, U2N relay technology-based communication mainly includes two types of communication: L2 U2N relay communication and L3 U2N relay communication. Embodiments of this application mainly describe the L2 U2N relay communication.

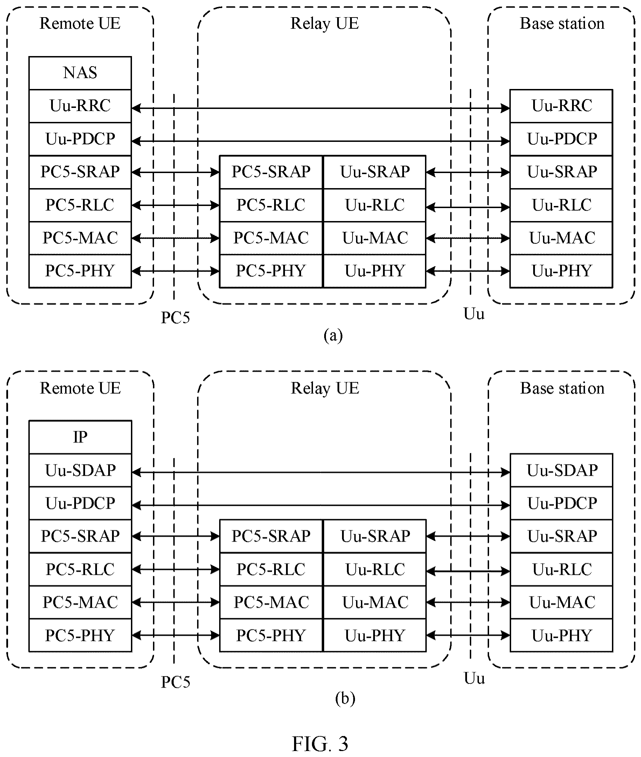

For example, FIG. 3 is a diagram of architectures of control plane protocol stacks and user plane protocol stacks between remote UE, relay UE, and a base station during the L2 U2N relay communication. As shown in (a) in FIG. 3, the control plane protocol stack of the remote UE is sequentially a non-access stratum (non-access stratum, NAS), a Uu-RRC layer, a Uu-PDCP layer, a PC5-SRAP layer, a PC5-RLC layer, a PC5-MAC layer, and a PC5-PHY layer from top to bottom. The NAS layer is used to communicate with a core network device. The control plane protocol stack of the base station is sequentially a Uu-RRC layer, a Uu-PDCP layer, a Uu-SRAP layer, a Uu-RLC layer, a Uu-MAC layer, and a Uu-PHY layer from top to bottom. For the relay UE, because the relay UE needs to separately communicate with the remote UE and the base station, the relay UE includes a control plane protocol stack that is equivalent to the remote UE and a control plane protocol stack that is equivalent to the base station. The control plane protocol stack that is equivalent to the remote UE is sequentially a PC5-SRAP layer, a PC5-RLC layer, a PC5-MAC layer, and a PC5-PHY layer from top to bottom. The control plane protocol stack that is equivalent to the base station is sequentially a Uu-SRAP layer, a Uu-RLC layer, a Uu-MAC layer, and a Uu-PHY layer from top to bottom.

A structure of the user plane protocol stack of the remote UE is similar to a structure of the control plane protocol stack of the remote UE, and a difference lies in that, as shown in (b) in FIG. 3, upper-layer protocol layers of the Uu-PDCP layer are sequentially the Uu-SDAP layer and an internet protocol (internet protocol, IP) layer. Correspondingly, a structure of the user plane protocol stack of the base station is similar to a structure of the control plane protocol stack of the base station, and a difference lies in that, as shown in (b) in FIG. 3, an upper layer protocol layer of the Uu-PDCP layer is the Uu-SDAP layer. The user plane protocol stack of the relay UE still includes the user plane protocol stack that is equivalent to the remote UE and the user plane protocol stack that is equivalent to the base station. As shown in (b) in FIG. 3, a structure of the user plane protocol layer of the relay UE is the same as a structure of the control plane protocol layer.

It may be understood that the protocol stack may be divided into L1, L2, and L3. The PHY layer belongs to L1; the PDCP layer, the SRAP layer, the RLC layer, and the MAC layer belong to L2; and the RRC layer and the SDAP layer belong to L3. Based on the control plane protocol stack and the user plane protocol stack shown in FIG. 3, when forwarding a data packet from the remote UE or the base station, the relay UE needs to perform relay forwarding only through an L2 protocol layer below the PDCP layer.

In a process of communication between the remote UE and the base station, the base station separately performs SRAP configuration for the remote UE and the relay UE. The SRAP configuration may include a local ID of the remote UE, a mapping relationship between a DRB ID/SRB ID of the remote UE and the Uu relay RLC channel, and a mapping relationship between the DRB ID or the SRB ID of the remote UE and the PC5 relay RLC channel. In this way, data sent by the base station or the remote UE can be correctly forwarded via the relay UE. The local ID of the remote UE is allocated by the base station and is used to identify the remote UE within coverage of the base station. The base station separately sends corresponding SRAP configurations to the remote UE and the relay UE, configures, for the remote UE, the local ID of the remote UE and the mapping relationship between the DRB ID or the SRB ID of the remote UE and the PC5 relay RLC channel, and configures, for the relay UE, the local ID of the remote UE, the mapping relationship between the DRB ID or the SRB ID of the remote UE and the Uu relay RLC channel, and the mapping relationship between the DRB ID or the SRB ID of the remote UE and the PC5 relay RLC channel.

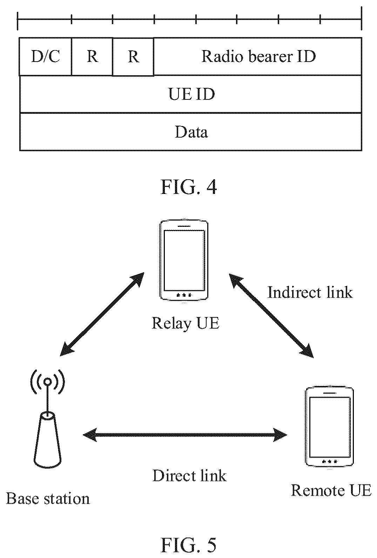

For example, in an uplink transmission process, after receiving a PDCP PDU from the PDCP layer, the SRAP layer of the remote UE adds remote UE local ID information and radio bearer (SRB or DRB) ID information to an SRAP packet header, and re-assembles the SRAP PDU. A structure of the SRAP PDU is shown in FIG. 4. A radio bearer (bearer) ID is the radio bearer ID information of the remote UE, and a UE ID is the local ID information of the remote UE. D/C is a 1-bit (bit) SRAP PDU type indication, 0 represents an SRAP data PDU, and 1 represents an SRAP control PDU. In the current R17 SL relay release, the SRAP control PDU is not supported, R is a reserved bit, and data (data) is a data payload part.

Further, the remote UE sequentially processes the SRAP PDU at the RLC layer, the MAC layer, and the PHY layer, and then sends the processed SRAP PDU to the relay UE. Correspondingly, after receiving the SRAP PDU from the PC5 relay RLC channel through the PHY layer, the MAC layer, and the RLC layer, the relay UE may submit the data to a correct Uu relay RLC channel based on the information carried in the SRAP packet header and the mapping relationships configured by the base station. After receiving the data packet from the Uu relay RLC channel, the base station may submit, based on the remote UE ID information and the radio bearer ID information in the SRAP packet header, the data packet to a corresponding PDCP layer for processing. It should be understood that a downlink transmission process is similar to the uplink transmission process. Details are not described herein again.

### 3. Multi-path relay (multi-path relay)

As an evolution of R17 UE-to-network relay, the multi-path relay is shown in FIG. 5. Remote UE may directly communicate with a base station, or may communicate with a base station via relay UE. In other words, the remote UE may communicate with the base station through a direct (direct) link and an indirect (indirect) link. On the direct link, the remote UE directly communicates with the base station through a Uu interface. On the indirect link, the remote UE communicates with the base station via the relay UE. In other words, the remote UE communicates with the relay UE through a sidelink, and the relay UE communicates with the base station via the Uu interface. Therefore, the remote UE may receive and send same or different data through both the two links, to improve a throughput rate and reliability of data receiving and sending.

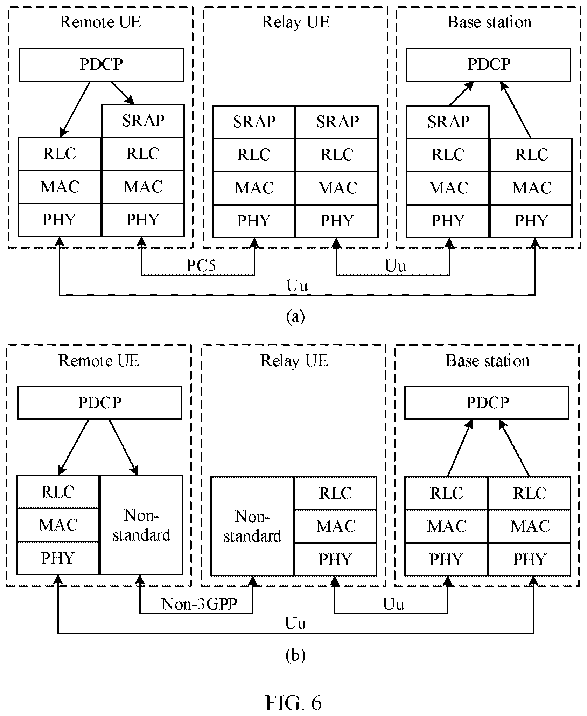

In a multi-path relay scenario, an architecture of protocol stacks between the remote UE, the relay UE, and the base station is shown in (a) in FIG. 6. Structures of the protocol stacks between the remote UE, the relay UE, and the base station are similar to the structures of the protocol stacks in the L2 U2N relay scenario shown in FIG. 3. A difference thereof lies in that because the remote UE may directly communicate with the base station, the remote UE and the base station further correspondingly have a set of peer structures of protocol stacks, and the set of peer structures of protocol stacks are sequentially PDCP layers, RLC layers, MAC layers, and PHY layers from top to bottom. In this scenario, the base station also separately performs SRAP configuration for the remote UE and the relay UE, to implement communication. In addition, a process in which the remote UE communicates with the base station via the relay UE is similar to that in the L2 U2N Relay scenario. Details are not described herein again.

The remote UE and the relay UE shown in FIG. 5 communicate with each other through the sidelink. In addition, the remote UE may further communicate with the relay UE through a non-3GPP (non-3GPP) link (that is, a link defined by non-3GPP, for example, a Wi-Fi link, a Bluetooth link, or a wired link). In this scenario, an SRAP is not used for communication between the remote UE, the relay UE, and the base station. An architecture of protocol stacks between the remote UE, the relay UE, and the base station in a non-3GPP link-based communication scenario is shown in (b) in FIG. 6. The remote UE communicates with the relay UE through the non-3GPP link, a non-standard protocol layer is used to process the data, and the relay UE performs, below the RLC layer, relay forwarding on end-to-end data of the remote UE. Because a bearer mapping function of a layer is not adapted to, bearer multiplexing is no longer performed on data on a radio bearer of the remote UE on the indirect link. In other words, an end-to-end radio bearer of the remote UE corresponds to, in a one-to-one manner, an RLC bearer (RLC bearer) of the relay UE or a logical channel (logical channel, LC) corresponding to the RLC bearer. An RLC bearer of one relay UE is used to transmit/carry data on a radio bearer of the remote UE. In other words, the RLC bearer of the relay UE corresponds to the end-to-end radio bearer of the remote UE. The end-to-end radio bearer of the remote UE is used to carry end-to-end data of the remote UE. The RLC bearer includes an RLC/MAC/PHY layer communication resource. One RLC bearer corresponds to one logical channel. In one UE, one RLC bearer is uniquely identified based on a logical channel identifier (logical channel identifier, LCID). In this scenario, the RLC bearer is a bearer between the relay UE and the base station.

Currently, in the L2 U2N relay scenario, SRAP layers of the remote UE and the relay UE route and forward the data based on the mapping relationships in the SRAP configurations delivered by the base station. In a data processing process, the SRAP layers of the remote UE and the relay UE perform error handling and packet discarding, to process a case in which content carried in SRAP packet headers does not match information in the SRAP configurations delivered by the base station. The following describes error handling processes of the remote UE and the relay UE based on uplink and downlink transmission.

For example, in the downlink transmission process, the SRAP layer of the remote UE receives an SRAP PDU from a PC5 relay RLC channel. If a bearer ID and a local ID that are carried in a packet header of the SRAP PDU are inconsistent with a bearer ID and a local ID that are in the SRAP configuration delivered by the base station to the remote UE, a packet is discarded. For example, the SRAP configuration delivered by the base station to the remote UE includes mapping relationship information (a bearer ID 1 and a local ID 1), but the packet header of the received SRAP PDU carries (a bearer ID 2 and the local ID 1), (the bearer ID 1 and a local ID 2), or (a bearer ID 2 and a local ID 2). This is inconsistent with information in the SRAP configuration delivered by the base station to the remote UE. In this case, the SRAP layer of the remote UE discards the received SRAP PDU. The foregoing inconsistency may occur when a processing error occurs at the SRAP layer of the relay UE. For example, the relay UE cannot correctly add, based on the SRAP configuration, bearer ID information or local ID information to the SRAP PDU sent to the remote UE.

For another example, in the uplink transmission process, the relay UE receives an SRAP PDU from the PC5 relay RLC channel. The SRAP PDU is discarded if a bearer ID and a local ID that are carried in a packet header of the SRAP PDU are inconsistent with a bearer ID and a local ID that are in the SRAP configuration delivered by the base station to the relay UE, and the SRAP PDU is not received on an SL-RLC 1; or if a correspondence between a local ID and an L2 ID carried in a packet header of the SRAP PDU is inconsistent with a correspondence between a local ID and an L2 ID in the SRAP configuration delivered by the base station to the relay UE. The SL-RLC 1 is a default PC5 relay RLC channel used to carry an SRB 1.

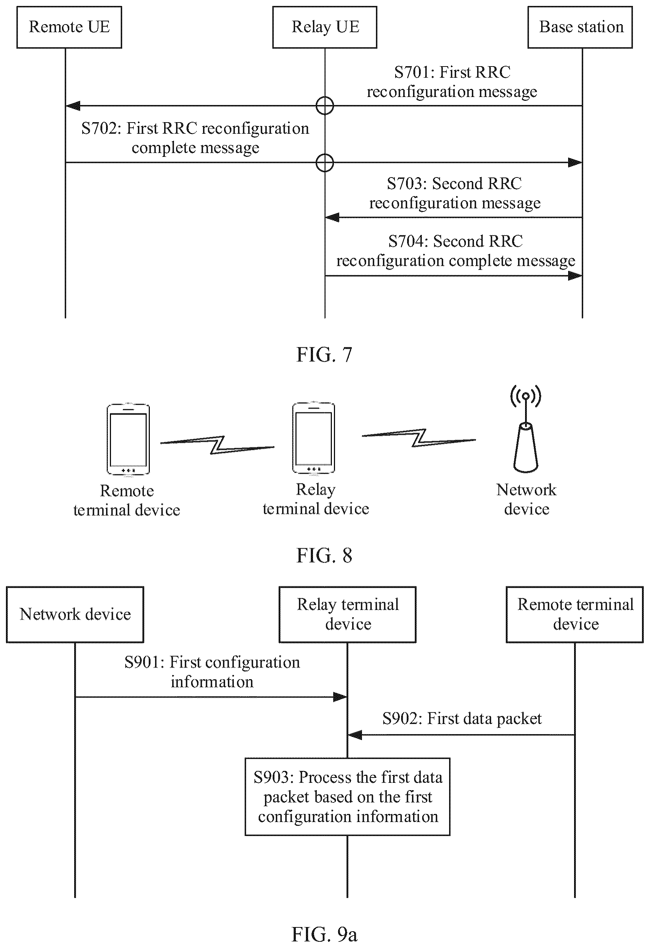

In addition, in the L2 U2N relay scenario, the base station updates the local ID of the remote UE based on an implementation, and ensures that an allocated local ID is unique within a service range of the base station. A process in which the base station updates the local ID of the remote UE is shown in FIG. 7.

S701: The base station sends a first RRC reconfiguration message to the remote UE via the relay UE. Correspondingly, the remote UE receives the first RRC reconfiguration message from the base station via the relay UE.

The first RRC reconfiguration message (RRC reconfiguration message) includes an updated local ID, and the updated local ID is included in a first SRAP configuration of the first RRC reconfiguration message. In other words, the updated local ID is still carried in the SRAP configuration for sending, and the first RRC reconfiguration message includes the first SRAP configuration. Therefore, the remote UE may update the locally stored local ID based on the received first SRAP configuration.

S702: The remote UE sends a first RRC reconfiguration complete message via the relay UE. Correspondingly, the base station receives the first RRC reconfiguration complete message from the remote UE via the relay UE.

The first RRC reconfiguration complete message (RRC reconfiguration complete message) is used to notify the base station that the remote UE has completed a local ID update.

It should be understood that, in the foregoing multi-path relay scenario, the base station may alternatively directly send the first RRC reconfiguration message to the remote UE, or the remote UE directly sends the first RRC reconfiguration complete message to the base station, without forwarding the first RRC reconfiguration complete message via the relay UE. Whether the relay UE is used for forwarding may be determined based on a configuration of the SRB 1. If the SRB 1 is configured on the direct link, the RRC reconfiguration message and the RRC reconfiguration complete message are transmitted on the direct link. If the SRB 1 is configured on the indirect link, the RRC reconfiguration message and the RRC reconfiguration complete message need to be forwarded via the relay UE.

S703: The base station sends a second RRC reconfiguration message to the relay UE. Correspondingly, the relay UE receives the second RRC reconfiguration message from the base station.

The second RRC reconfiguration message also carries the updated local ID, and the updated local ID is included in the second SRAP configuration of the second RRC reconfiguration message. In other words, the second RRC reconfiguration message includes the second SRAP configuration, and the second SRAP configuration includes the updated local ID. Therefore, the relay UE may update the locally stored local ID based on the received second SRAP configuration.

S704: The relay UE sends a second RRC reconfiguration complete message to the base station. Correspondingly, the base station receives the second RRC reconfiguration complete message from the relay UE.

The second RRC reconfiguration complete message is used to notify the base station that the relay UE has completed a local ID update.

However, when the base station separately sends the updated local ID to the remote UE and the relay UE based on the RRC reconfiguration message, time at which the remote UE receives the RRC reconfiguration message may not be strictly consistent with time at which the relay UE receives the RRC reconfiguration message, that is, time at which the remote UE updates the local ID is not synchronized with time at which the relay UE updates the local ID. One end has completed the update but the other end has not completed the update. If UE that has not completed the update sends the SRAP PDU to UE that has completed the update based on the local ID that has not been updated, that is, if the SRAP PDU packet header carries the local ID that is not updated, the UE that has completed the update considers that the local ID carried in the received SRAP PDU is inconsistent with the local ID in the current SRAP configuration of the UE, and discards the SRAP PDU. Consequently, this causes a data packet loss. If the UE that has completed the update sends, based on the updated local ID, the SRAP PDU to the UE that has not completed the update, that is, the SRAP PDU packet header carries the updated local ID, the UE that has not completed the update also considers that the local ID carried in the received SRAP PDU is inconsistent with the local ID in the current SRAP configuration of the UE, and discards the SRAP PDU. Consequently, this causes a data packet loss. In addition, if the SRAP PDU carries the RRC reconfiguration message used for the update, the remote UE cannot complete the local ID update.

In view of this, embodiments of this application provide a communication method, to avoid a data packet loss caused by asynchronous time of updating local IDs by remote UE and relay UE.

For example, FIG. 8 is a diagram of an architecture of a communication system according to an embodiment of this application. As shown in FIG. 8, the communication system includes a network device, a relay terminal device, and a remote terminal device. The network device communicates with the relay terminal device through a radio link, and the relay terminal device communicates with the remote terminal device through a sidelink. The network device may directly communicate with the remote terminal device, or may communicate with the remote terminal device via the relay terminal device. For example, FIG. 8 shows one network device, one relay terminal device, and one remote terminal device. A quantity of network devices, a quantity of relay terminal devices, and a quantity of remote terminal devices are not limited in embodiments of this application.

In this embodiment of this application, the relay terminal device is located within coverage of the network device. The remote terminal may be located within the coverage of the network device, or may be located outside the coverage of the network device. This is not specifically limited.

The network device is a device that is located on a network side of the communication system and has a wireless transceiver function, or a chip or a chip system that can be disposed in the device. The network device includes but is not limited to: an access point (access point, AP) in a wireless fidelity (wireless fidelity, Wi-Fi) system, for example, a home gateway, a router, a server, a switch, and a bridge, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless relay node, a wireless backhaul node, a transmission point (transmission and reception point, TRP; or transmission point, TP), or the like. The network device may alternatively be a gNB or a transmission point (TRP or TP) in a 5G system, for example, an NR system, one base station or a group of base stations (including a plurality of antenna panels) in a 5G system. The network device may alternatively be a network node, for example, a baseband unit (BBU), a distributed unit (distributed unit, DU), or a road side unit (road side unit, RSU) having a base station function, that constitutes a gNB or a transmission point.

The relay terminal device is a terminal device that can provide a relay service or a chip or a chip system that can be disposed in the terminal device, and the remote terminal device is a terminal device that supports access to the network device by using the relay service or a chip or a chip system that can be disposed in the terminal device. The terminal device may also be referred to as a user apparatus, an access terminal, a subscriber unit, a subscriber station, a mobile station, a mobile console, a remote station, a remote terminal device, a mobile device, a user terminal, a terminal, a wireless communication device, a user agent, or a user apparatus. The terminal device in embodiments of this application may be a mobile phone (mobile phone), a tablet (Pad), a computer that has a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, an RSU that has a terminal function, or the like. The terminal device in this application may alternatively be a vehicle-mounted module, a vehicle-mounted assembly, a vehicle-mounted component, a vehicle-mounted chip, or a vehicle-mounted unit that is built in a vehicle as one or more components or units. The vehicle may implement the communication method in this application by using the vehicle-mounted module, the vehicle-mounted assembly, the vehicle-mounted component, the vehicle-mounted chip, or the vehicle-mounted unit that is built in the vehicle.

It should be noted that the communication method provided in embodiment of this application may be applicable to the network device, the relay terminal device, and the remote terminal device shown in FIG. 8. For specific implementation, refer to the following method embodiments. Details are not described herein.

It should be noted that the solutions in embodiments of this application may also be used in another communication system, and a corresponding name may also be replaced with a name of a corresponding function in the another communication system.

It should be understood that FIG. 8 is merely a simplified diagram of an example for ease of understanding. The communication system may further include another network device and/or another terminal device that are/is not shown in FIG. 8.

The following describes in detail the communication method provided in embodiments of this application with reference to FIG. 9a to FIG. 12.

It should be noted that the communication method provided in embodiments of this application may be applied to a scenario in which a local ID is updated for a first time or is updated based on a last updated local ID. In the scenario shown in FIG. 8, before the network device updates local identities for the remote terminal device and the relay terminal device, both the remote terminal device and the relay terminal device are locally configured with configuration information that is delivered by the network device last time and that includes the local identities. In other words, before new configuration information is delivered, the remote terminal device and the relay terminal device still use latest received configuration information to receive and send data.

In this embodiment of this application, a first data packet represents a data packet from the remote terminal device (that is, a data packet sent by the remote terminal device), and a second data packet represents a data packet from the relay terminal device (that is, a data packet sent or forwarded by the relay terminal device). Information carried in first data packets received at different moments in different scenarios may be different. For example, the relay terminal device determines that the remote terminal device has completed a local identifier update, and the received first data packet is a data packet 1. The data packet 1 carries a local ID 1 and data 1. The relay terminal device determines that the remote terminal device has not completed a local identifier update, and the received first data packet is a data packet 2. The data packet 2 carries a local ID 2 and data 2.

For example, FIG. 9a is a schematic flowchart of a communication method according to an embodiment of this application. As shown in FIG. 9a, the communication method includes the following steps.

S901: A network device sends first configuration information to a relay terminal device. Correspondingly, the relay terminal device receives the first configuration information from the network device.

In this embodiment of this application, the first configuration information is used to configure the relay terminal device to receive and send data, and the first configuration information includes a first local identifier and a first identifier. The first local identifier is an identifier that is allocated by the network device and that identifies a remote terminal device, and the first local identifier is used by the network device to uniquely identify the remote terminal device within a service range of the network device. For example, the first local identifier may be a local ID. The first identifier is an identifier that is allocated by the remote terminal device and that identifies the remote terminal device. For example, the first identifier is an identifier used by the remote terminal device to perform sidelink communication with the relay terminal device, or the first identifier may be an L2 identifier allocated by the remote terminal device to the remote terminal device. It should be understood that the first configuration information may further include other information, like a radio bearer identifier (for example, an SRB ID and/or a DRB ID) of the remote terminal device and a mapping relationship between the radio bearer identifier and a Uu relay RLC channel or a PC5 relay RLC channel, that can be used by the relay terminal device to receive and send data transmitted between the remote terminal device and the network device. This is not specifically limited in embodiments of this application.

For example, after receiving the first configuration information, the relay terminal device directly updates configuration information in a current configuration to the first configuration information. In other words, the first configuration information is used as configuration information used before updated configuration information is received next time.

In a possible design solution, the first configuration information may be carried in an RRC reconfiguration message for sending, the RRC reconfiguration message may be carried in a data packet for sending, and a radio bearer identifier in the data packet includes the SRB ID.

It should be understood that local identities corresponding to different remote terminal devices are different from identities used for sidelink communication.

S902: The relay terminal device receives a first data packet from the remote terminal device based on the first identifier.

In this embodiment of this application, the relay terminal device receives the first data packet based on the first identifier, to represent that the relay terminal device determines that the first data packet comes from the remote terminal device or a sidelink between the relay terminal device and the remote terminal device. For example, if the first identifier is an L2 ID of the remote terminal device, the relay terminal device may determine, based on a sidelink data receiving process in an existing design solution, the L2 ID of the remote terminal device, some L2 IDs in received SCI, and some L2 IDs carried in the received first data packet, whether the first data packet comes from the remote terminal device. For a specific implementation process, refer to related descriptions in the existing design solution. Details are not described herein. In other words, the remote terminal device sends the first data packet to the relay terminal device, and correspondingly, the relay terminal device receives the first data packet from the remote terminal device. The first data packet carries a second local identifier, and the second local identifier is an identifier that is configured by the network device for the remote terminal device and that identifies the remote terminal device.

S903: The relay terminal device processes the first data packet based on the first configuration information.

For example, after determining that the first data packet comes from the remote terminal device, the relay terminal device processes the first data based on the first configuration information corresponding to the first identifier. In this embodiment of this application, processing the first data based on the first configuration information includes but is not limited to the following design solutions.

In a possible design solution, the relay terminal device replaces the second local identifier carried in the first data packet with the first local identifier, and performs error handling on the first data packet based on the first configuration information. For example, the relay terminal device may directly replace the local identifier (that is, the second local identifier) in the first data packet with the first local identifier in the first configuration information. In this case, the local identifier in the first data packet is the first local identifier. Therefore, error handling may be performed based on a radio bearer identifier carried in the first data packet and the radio bearer identifier in the first configuration information. In this case, the error handling is determining whether the first local identifier and the radio bearer identifier that are in the first data packet are the same as the first local identifier and the radio bearer identifier that are in the first configuration information. If the first local identifier and the radio bearer identifier that are in the first data packet are the same as the first local identifier and the radio bearer identifier that are in the first configuration information, it is considered that the first data packet is correct, and the first data packet may be further forwarded to the network device. If the first local identifier and the radio bearer identifier that are in the first data packet are different from the first local identifier and the radio bearer identifier that are in the first configuration information, it is considered that the first data packet is incorrect, and is discarded. Based on this design solution, it is equivalent to that the second local identifier carried in the received first data packet and the first local identifier in the first configuration information are no longer matched and checked.

In a possible design solution, the relay terminal device replaces the first local identifier carried in the first configuration information with the second local identifier, and performs error handling on the first data packet based on the first configuration information. For example, the relay terminal device may alternatively replace the first local identifier in the first configuration information with the second local identifier. Therefore, error handling may be performed based on a radio bearer identifier carried in the first data packet and the radio bearer identifier in the first configuration information. In this case, the error handling is determining whether the second local identifier and the radio bearer identifier that are in the first data packet are the same as the second local identifier and the radio bearer identifier that are in the first configuration information. If the second local identifier and the radio bearer identifier that are in the first data packet are the same as the second local identifier and the radio bearer identifier that are in the first configuration information, it is considered that the first data packet is correct, and the first data packet may be further forwarded to the network device. If the second local identifier and the radio bearer identifier that are in the first data packet are different from the second local identifier and the radio bearer identifier that are in the first configuration information, it is considered that the first data packet is incorrect, and is discarded. Based on this design solution, it is alternatively equivalent to that the second local identifier in the first data packet and the first local identifier in the first configuration information are no longer matched and checked.

In a possible design solution, the relay terminal device ignores error handling on the first data packet. For example, after determining that the first data packet comes from the remote terminal device, the relay terminal device may not perform matching verification on the local identifier (that is, the second local identifier) in the first data packet and the local identifier in the first configuration information, and consider that the first data packet is correct.

It should be understood that after performing any one type of the foregoing possible error handling, the relay terminal device may forward the first data packet if determining that the first data packet is correct.

In a possible design solution, the relay terminal device forwards the first data packet based on the first configuration information. For example, after determining that the first data packet comes from the remote terminal device, the relay terminal device may directly forward the first data packet to the network device based on the first local identifier in the first configuration information (that is, replace the local identifier in the first data packet with the first local identifier in the first configuration information, and forward the first data packet to the network device), or may directly forward the first data packet to the network device without modifying the second local identifier in the first data packet.

It should be noted that "processing the first data based on the first configuration information" in this embodiment of this application includes but is not limited to operations such as ignoring matching, replacement, error handling, and forwarding described in the foregoing design solution. This is not specifically limited herein.

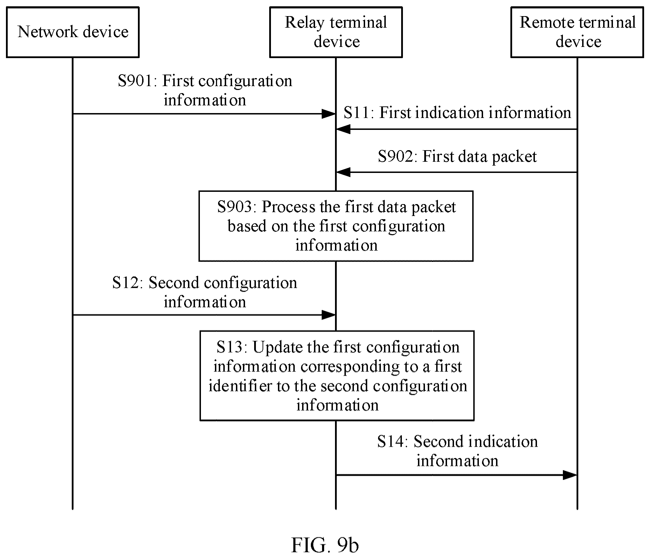

In a possible design solution, based on the scenarios in S901 and S902, before S902 is performed, as shown in FIG. 9b, the communication method provided in this embodiment of this application may further include the following steps.

S11: The remote terminal device sends the first indication information to the relay terminal device. Correspondingly, the relay terminal device receives the first indication information from the remote terminal device.

The first indication information indicates that the remote terminal device has completed a local identifier update. Therefore, after receiving the first data packet, the relay terminal device determines that the first local identifier in the current first configuration information is different from the second local identifier in the first data packet, and considers that the second local identifier is an updated first local identifier. After receiving the first data packet, the relay terminal device performs related processing in S903. It should be understood that, before the relay terminal device determines that the remote terminal device has completed the local identifier update and determines that the relay terminal device has not completed the local identifier update, the relay terminal device performs related processing in S903 on the first data packet received from the remote terminal device. In this case, the received first data packet is a data packet 1 until the relay terminal device completes the local identifier update. For example, the relay terminal device performs S12 and S13, stops performing related processing in S903 on the received first data packet from the remote terminal device, and processes the subsequently received first data packet based on an existing error handling procedure. In other words, after receiving the first indication information, the relay terminal device triggers the processing operation in S903 based on the first indication information, until the relay terminal device completes the local identifier update.

In a possible design solution, the first indication information may include the second local identifier, that is, the first indication information carries the updated local identifier. Optionally, the first indication information may further include a local identifier before the update, that is, the first local identifier, or may further include the first identifier.

When the relay terminal device has not completed the local identifier update, but the remote terminal device has completed the local identifier update, in a possible design solution, S903 may be alternatively replaced with the following: The relay terminal device stores the first data packet. To be specific, after determining that the first data packet comes from the remote terminal device, the relay terminal device does not perform processing like subsequent data parsing and error matching on the first data packet, but stores the first data packet until the relay terminal device completes the local identifier update. For example, the relay terminal device performs S12 and S13, and processes the stored first data packet. That is, after receiving the updated configuration information, the relay terminal device may process the stored first data packet based on the updated configuration information (for example, the following second configuration information), for example, forward the first data packet to the network device based on the second configuration information.

S12: The network device sends the second configuration information to the relay terminal device. Correspondingly, the relay terminal device receives the second configuration information from the network device.

The second configuration information includes the second local identifier and the first identifier. It should be understood that the second configuration information may further include other information, like a radio bearer identifier (for example, an SRB ID and/or a DRB ID) of the remote terminal device and a mapping relationship between the radio bearer identifier and a Uu relay RLC channel or a PC5 relay RLC channel, that can be used by the relay terminal device to receive and send data transmitted between the remote terminal device and the network device. This is not specifically limited in embodiments of this application.

S13: The relay terminal device updates the first configuration information corresponding to the first identifier to the second configuration information.

For example, after receiving the second configuration information, the relay terminal device may determine, based on the first identifier in the second configuration information, the remote terminal device corresponding to the second configuration information, to update the first configuration information corresponding to the first identifier to the second configuration information. In other words, the first configuration information in the current configuration is replaced with the second configuration information, to complete the local identifier update of the remote terminal device.

In a possible design solution, the second configuration information may alternatively be carried in an RRC reconfiguration message for sending, the RRC reconfiguration message may be carried in a data packet for sending, and a radio bearer identifier in the data packet includes the SRB ID.

After completing the local identifier update based on S12 and S13, the relay terminal device may process, based on the updated local identifier, the data packet received after the update, that is, stop performing related processing in S903. For example, the relay terminal device stops, based on the second configuration information, the operation of processing the first data packet based on the first configuration information, and processes the received first data packet based on the second configuration information. For example, after receiving the first data packet based on the first identifier, the relay terminal device processes the first data packet based on the second configuration information (that is, processes the first data packet based on the error handling process in the existing solution). For example, in this case, the received first data packet is a data packet 2, and the relay terminal device determines whether a local identifier and a radio bearer identifier that are carried in the data packet 2 are consistent with a local identifier and a radio bearer identifier that are in the second configuration information (that is, performs error handling). If the local identifier and the radio bearer identifier that are carried in the data packet 2 are consistent with the local identifier and the radio bearer identifier that are in the second configuration information, the relay terminal device determines that the data packet 2 needs to be forwarded to the network device. If the local identifier and the radio bearer identifier that are carried in the data packet 2 are inconsistent with the local identifier and the radio bearer identifier that are in the second configuration information, the relay terminal device discards the data packet 2. Alternatively, the relay terminal device forwards the data packet to the remote terminal device based on the second configuration information. In other words, the relay terminal device forwards, based on related information in the second configuration information, the data packet sent by the network device.

After the relay terminal device completes the local identifier update based on S12 and S13, as shown in FIG. 9b, the communication method provided in this embodiment of this application may further include the following step.

S14: The relay terminal device sends second indication information to the remote terminal device. Correspondingly, the remote terminal device receives the second indication information from the relay remote device.

The second indication information indicates that the relay terminal device has completed the local identifier update. For example, the relay terminal device may notify, based on the second indication information, the remote terminal device that the relay terminal device completes the local identifier update. Optionally, the second indication information may further include the second local identifier, that is, the second indication information carries the updated local identifier. Optionally, the second indication information may further include the local identifier before the update, that is, the first local identifier, or may further include the first identifier.

It can be learned that, in the scenario shown in FIG. 9b, the relay terminal device triggers, based on S11, a start of the operation in S903, and triggers, based on S13 or S14, a stop of the operation in S903. In addition, the relay terminal device may alternatively start the operation in S903 and stop the operation in S903 based on the following possible implementations.

In a possible implementation, S11 may be replaced with the following: The network device sends a start indication to the relay terminal device. Correspondingly, the relay terminal device triggers, based on the received start indication, the start of the operation in S903, and triggers the stop of the operation in S903 after receiving the second configuration information, that is, after S12 is performed.

In another possible implementation, S11 may be replaced with the following: The relay terminal performs determining by itself based on an implementation. For example, when determining that the second local identifier in the first data packet is different from the first local identifier in the first configuration information, but another identifier like the radio bearer identifier, is the same as that in the first configuration, the relay terminal starts processing in S903.

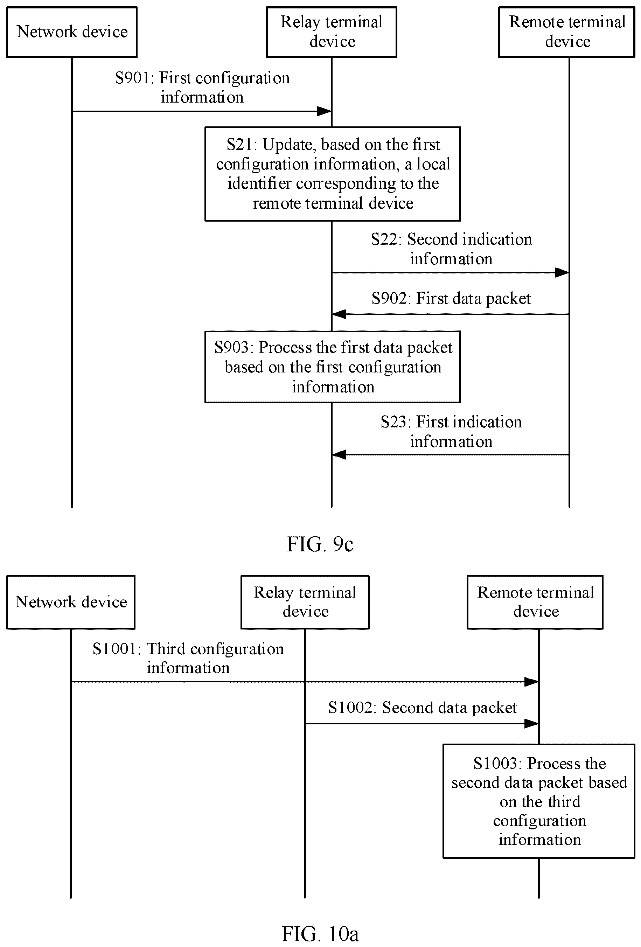

In another possible design solution, based on the scenarios in S901 to S903, before the relay terminal device receives the first data packet based on the first identifier, as shown in FIG. 9c, the communication method provided in this embodiment of this application may further include the following steps.

S21: The relay terminal device updates, based on the first configuration information, the local identifier corresponding to the remote terminal device.

For example, after receiving the first configuration information, the relay terminal device determines corresponding configuration information in the current local configuration based on the first identifier in the first configuration information, to replace the configuration information corresponding to the first identifier in the current local configuration with the first configuration information, that is, complete the local identifier update. In other words, the first configuration information is the updated configuration information.

Further, after the relay terminal device completes the local identifier update, if the relay terminal device has not received update completion indication information sent by the remote terminal device, it may be considered that the remote terminal device has not completed the local identifier update. Therefore, before the remote terminal device completes the local identifier update, the relay terminal device performs S903 on the first data packet from the remote terminal device until the relay terminal device receives updated indication information from the remote terminal device, for example, S23 in the following, and stops performing the operation in S903. In other words, the relay terminal device triggers execution of S903 based on the first configuration information, stops performing the operation in S903 after performing S23 in the following, and processes, based on the first configuration information by using an existing error matching process, the first data packet received after both the remote terminal device and the relay terminal device complete the updates of the local identities. In this scenario, the first local identifier is the updated local identifier, and the second local identifier is the local identifier before the update.

In a scenario in which the relay terminal device completes the local identifier update and the remote terminal device has not completed the local identifier update, after the relay terminal device receives the updated configuration information (that is, the first configuration information), in a possible design solution, S903 may be replaced with the following: When updating the configuration information, the relay terminal device may store the old configuration information, to receive the first data packet from the remote terminal device based on the old configuration information. The data packet carries the local identifier before the update, that is, the second local identifier. For example, the relay terminal device processes the first data packet based on fifth configuration information. The fifth configuration information is the configuration information before the update. It can be learned that before the relay terminal device receives the first configuration information, the configuration information corresponding to the first identifier configured by the network device is the fifth configuration information, and the relay terminal device does not immediately release the old configuration information (that is, the fifth configuration information) when updating the configuration information. In other words, the relay terminal device stores both the first configuration information and the fifth configuration information, so that the relay terminal device can process the received first data packet based on the fifth configuration information corresponding to the first identifier. In other words, the local identifier and the radio bearer identifier that are in the first data packet are matched with a local identifier and a radio bearer identifier that are in the fifth configuration information. If the local identifier and the radio bearer identifier that are in the first data packet are consistent with the local identifier and the radio bearer identifier that are in the fifth configuration information, the first data packet is correct, and may be forwarded to the network device. If the local identifier and the radio bearer identifier that are in the first data packet are inconsistent with the local identifier and the radio bearer identifier that are in the fifth configuration information, the first data packet is incorrect, and is discarded.

In this scenario, the relay terminal device may alternatively send the second data packet to the remote terminal device based on the stored old configuration information. For example, the relay terminal device sends the second data packet to the remote terminal device based on the fifth configuration information. Correspondingly, the remote terminal device receives the second data packet from the relay terminal device. The second data packet carries the second local identifier. In other words, the relay terminal device stores both the first configuration information and the fifth configuration information, and when the remote terminal device has not completed the local identifier update, the relay terminal device sends the data packet to the remote terminal device based on the fifth configuration information corresponding to the first identifier. In this scenario, the first configuration information is equivalent to the second configuration information in the scenario shown in FIG. 9b, and the fifth configuration information is equivalent to the first configuration information in the scenario shown in FIG. 9b.

When the relay terminal device is configured to store both old and new of configuration information (that is, store both the first configuration information and the fifth configuration information), in a possible design solution, S903 may be replaced with the following: The relay terminal device may further process the first data packet from the remote terminal device based on the first configuration information or the fifth configuration information. For example, the relay terminal device may determine whether the local identifier carried in the first data packet is the first local identifier or the second local identifier. If the local identifier carried in the first data packet is the first local identifier, the relay terminal device selects the first configuration information to process the first data packet. For example, the local identifier and the radio bearer identifier that are in the first data packet are matched with the first local identifier and the radio bearer identifier that are in the first configuration information, and error handling is performed. The data packet is forwarded to the network device based on the first configuration information or the fifth configuration information when the local identifier and the radio bearer identifier that are in the first data packet are matched with the first local identifier and the radio bearer identifier that are in the first configuration information. If the local identifier carried in the first data packet is the second local identifier, the relay terminal device selects the fifth configuration information to process the first data packet. For example, the local identifier and the radio bearer identifier that are in the first data packet are matched with a second local identifier and the radio bearer identifier that are in the fifth configuration information, and error handling is performed. The data packet is forwarded to the network device based on the first configuration information or the fifth configuration information when the local identifier and the radio bearer identifier that are in the first data packet are matched with the second local identifier and the radio bearer identifier that are in the fifth configuration information. In this scenario, the relay terminal device may not determine whether the remote terminal device has completed the local identifier update.

In this scenario, the relay terminal device may receive and send the data based on both the old and new configuration information within preset duration after receiving the first configuration information. For example, the relay terminal device starts a first timer based on the first configuration information, and processes the first data packet from the remote terminal device within first timing duration of the first timer based on the first configuration information or the fifth configuration information. In other words, after receiving the updated configuration information (that is, the first configuration information), the relay terminal device starts the first timer to perform timing. Within the first timing duration, the relay terminal device may process the received data packet based on both the old and new configuration information. In a possible case, the relay terminal device may alternatively start the first timer after completing the update of the configuration information, for example, when sending the updated indication (that is, the second indication information) to the remote terminal device. A start moment of the first timer is not specifically limited in embodiments of this application. For another example, the relay terminal device sends the second data packet to the remote terminal device within the first timing duration based on the first configuration information or the fifth configuration information.

In a possible case, the second data packet carries the updated configuration information of the remote terminal device, that is, the relay terminal device forwards the updated configuration information configured by the network device for the remote terminal device. When the relay terminal device has completed the local identifier update and is configured to store both the old and new of configuration information, the relay terminal device may forward, based on the old configuration information (that is, the fifth configuration information), the second data packet carrying the updated configuration information of the remote terminal device, that is, the local identifier carried in the second data packet is the second local identifier.

In this embodiment of this application, the first timing duration may be duration preset by the relay terminal device, or may be duration configured by the network device for the relay terminal device, or may be duration negotiated by the relay terminal device and the remote terminal device. This is not specifically limited in embodiments of this application. The first timing duration may be determined based on information like an updated time difference between the relay terminal device and the remote terminal device, a processing capability of the relay terminal device, and a processing capability of the remote terminal device. This is not specifically limited in embodiments of this application.

Further, after the relay terminal device completes the local identifier update, as shown in FIG. 9c, the communication method provided in this embodiment of this application may further include the following steps.

S22: The relay terminal device sends the second indication information to the remote terminal device. Correspondingly, the remote terminal device receives the second indication information from the relay remote device.

The second indication information indicates that the relay terminal device has completed the local identifier update. For example, the relay terminal device may notify, based on the second indication information, the remote terminal device that the relay terminal device completes the local identifier update. Optionally, the second indication information may further include the first local identifier, that is, the second indication information carries an updated local identifier. Optionally, the second indication information may further include a local identifier before the update, that is, the second local identifier.

S23: The remote terminal device sends the first indication information to the relay terminal device. Correspondingly, the relay terminal device receives the first indication information from the remote terminal device.

The first indication information indicates that the remote terminal device has completed the local identifier update. Optionally, the first indication information carries the updated local identifier of the remote terminal device, that is, the first local identifier.

Further, after determining, based on the first indication information, that the remote terminal device has completed the update, the relay terminal device may not perform S903 on the first data packet that is subsequently received from the remote terminal device. The relay terminal device matches the local identifier and the radio bearer identifier that are in the received data packet with the first local identifier and the radio bearer identifier that are in the first configuration information, performs error handling, and forwards the data packet to the network device based on the first configuration information when the local identifier and the radio bearer identifier that are in the received data packet are matched with the first local identifier and the radio bearer identifier that are in the first configuration information. For example, the relay terminal device stops, based on the first indication information, processing the first data packet based on the first configuration information. In this case, stopping processing the first data packet based on the first configuration information indicates stopping performing the processing operation in S903, and processing, based on the first configuration information by using the existing error matching process, the first data packet received after both the remote terminal device and the relay terminal device complete the updates of the local identities. In this case, the first data packet is a data packet sent by the remote terminal device after the remote terminal device updates the local identifier.

In addition, the relay terminal device may alternatively send the data packet to the remote terminal device based on the first configuration information. In this case, the data packet carries the first local identifier.

When the relay terminal device stores both the old and new of configuration information (that is, stores both the first configuration information and the fifth configuration information), after receiving the first indication information, the relay terminal device may release the old configuration information based on the first indication information. For example, after receiving the first indication information, the relay terminal device releases the fifth configuration information. Alternatively, the relay terminal device releases the fifth configuration information when the first timer reaches the first timing duration (that is, an end moment of the first timing duration).

According to the communication method shown in FIG. 9b or FIG. 9c, regardless of whether the relay terminal device completes the local identifier update first or later, the relay terminal device can associate the first data packet with the first identifier, and associate the first data packet with the first configuration information corresponding to the first identifier to process the first data packet from the remote terminal device, to avoid a data packet loss caused by asynchronous updates of the local identities of the remote terminal device and the relay terminal device, thereby improving data transmission reliability.

For example, FIG. 10a is a schematic flowchart of another communication method according to an embodiment of this application. As shown in FIG. 10a, the communication method includes the following steps.

S1001: A network device sends third configuration information to a remote terminal device. Correspondingly, the remote terminal device receives the third configuration information from the network device.

In this embodiment of this application, the third configuration information is used to configure the remote terminal device to receive and send data, and the third configuration information includes a third local identifier and a first identifier. The third local identifier is an identifier configured by the network device to identify the remote terminal device. For related descriptions of the third configuration information, refer to related descriptions of the first configuration information in S901, and for related descriptions of the first identifier, refer to related descriptions of the first identifier in S901. Details are not described herein again.

For example, after receiving the third configuration information, the remote terminal device directly updates configuration information in a current configuration to the third configuration information. In other words, the third configuration information is used as configuration information used before updated configuration information is received next time.

S1002: The remote terminal device receives a second data packet from a relay terminal device.

The second data packet carries a fourth local identifier, and the fourth local identifier is an identifier that is allocated by the network device to the relay terminal device and that identifies the remote terminal device.

For example, the remote terminal device receives the second data packet based on a second identifier of the relay terminal device, and may determine that the second data packet comes from the relay terminal device. The second identifier is an identifier, for example, an L2 ID, allocated by the relay terminal device to the relay terminal device, and is used for communication on a sidelink.

S1003: The remote terminal device processes the second data packet based on the third configuration information.

For example, after determining that the second data packet comes from the relay terminal device, the remote terminal device processes the second data packet based on the third configuration information corresponding to the first identifier. In this embodiment of this application, processing the second data based on the third configuration information includes but is not limited to the following design solutions.

In a possible design solution, the remote terminal device replaces the fourth local identifier carried in the second data packet with the third local identifier, and performs error handling on the second data packet based on the third configuration information.

In a possible design solution, the remote terminal device replaces the third local identifier carried in the third configuration information with the fourth local identifier, and performs error handling on the second data packet based on the third configuration information.

In a possible design solution, the remote terminal device ignores error handling on the second data packet. For example, after determining that the second data packet comes from the relay terminal device, the remote terminal device may not perform matching verification on the local identifier (that is, the fourth local identifier) in the second data packet and the local identifier in the third configuration information, and consider that the first data packet is correct.

For a specific implementation process of the foregoing design solution, refer to the related processing process of the relay terminal device in S903. Details are not described herein again. It should be understood that, after performing any one type of the foregoing possible error handling, if determining that the second data packet is correct, the remote terminal device may continue to transmit the second data packet to an upper layer, and the upper layer configures and processes the second data packet. Alternatively, the remote terminal device directly submits the second data packet to an upper layer without performing any one type of the foregoing possible error handling.

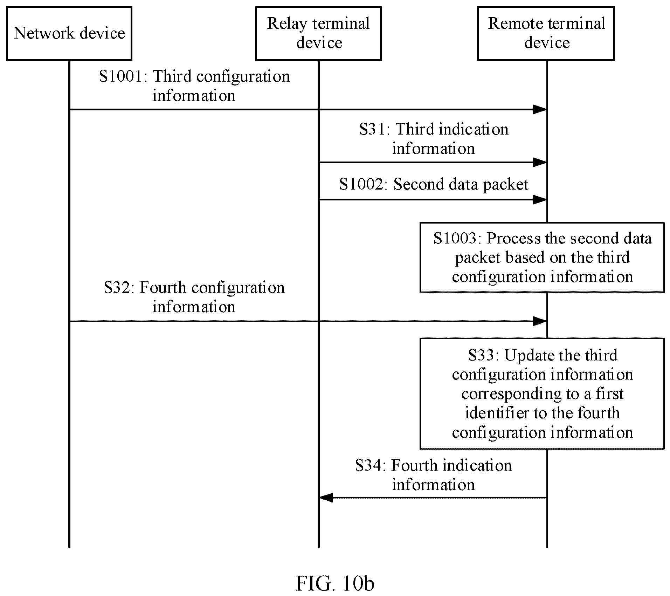

In a possible design solution, based on the scenarios in S 1001 and S 1002, before S1002 is performed, as shown in FIG. 10b, the communication method provided in this embodiment of this application may further include the following steps.

S31: The relay terminal device sends third indication information to the remote terminal device. Correspondingly, the remote terminal device receives the third indication information from the relay terminal device.

The third indication information indicates that the relay terminal device has completed a local identifier update. Therefore, after receiving the second data packet, the remote terminal device determines that the third local identifier in the current third configuration information is different from the fourth local identifier in the second data packet, and considers that the fourth local identifier is an updated third local identifier. After receiving the second data packet, the remote terminal device performs related processing in S1003.

In a possible case, the second data packet may carry fourth configuration information, the fourth configuration information is an updated configuration of the third configuration information, and the fourth configuration information includes the fourth local identifier and the first identifier. Therefore, the remote terminal device may process the second data packet, that is, perform S1003, to obtain the fourth configuration information, and update the third local identifier to the fourth local identifier. Similarly, before the remote terminal device determines that the relay terminal device has completed the local identifier update and determines that the remote terminal device has not completed the local identifier update, the remote terminal device performs related processing in S1003 on the second data packet received from the relay terminal device until the remote terminal device completes the local identifier update. For example, the remote terminal device performs S32 and S33, stops performing related processing in S1003 on the received second data packet from the relay terminal device, and processes the subsequently received second data packet based on an existing error handling procedure. In other words, after receiving the third indication information, the remote terminal device triggers the processing operation in S1003 based on the third indication information, until the remote terminal device completes the local identifier update.

In a possible design solution, the third indication information may include the fourth local identifier, that is, the third indication information carries an updated local identifier. Optionally, the third indication information may further include a local identifier before the update, that is, the third local identifier, or may further include the first identifier.

When the remote terminal device has not completed the local identifier update, but the relay terminal device has completed the local identifier update, in a possible design solution, S1003 may be alternatively replaced with the following: The remote terminal device stores the second data packet. In other words, after receiving the second data packet, the remote terminal device does not perform processing like subsequent data parsing and error matching on the second data packet, but stores the second data packet until the remote terminal device completes the local identifier update, for example, performs S32 and S33 in the following, and processes the second data packet.

S32: The network device sends the fourth configuration information to the remote terminal device. Correspondingly, the remote terminal device receives the fourth configuration information sent by the network device.

The fourth configuration information includes the fourth local identifier and the first identifier, and the fourth configuration information is the updated configuration information. It should be understood that the fourth configuration information may further include other information, like a radio bearer identifier (for example, an SRB ID and/or a DRB ID) of the remote terminal device and a mapping relationship between the radio bearer identifier and a PC5 relay RLC channel, that can be used by the remote terminal device to receive and send relay data. This is not specifically limited in embodiments of this application.

In a possible scenario, in the scenario shown in FIG. 5, the network device may directly send the fourth configuration information to the remote terminal device, or may forward the fourth configuration information via the relay terminal device. In a scenario in which the relay terminal device performs forwarding, because the relay terminal device currently has completed the local identifier update, when the relay terminal device forwards the second data packet carrying the fourth configuration information, the local identifier carried in the second data packet is the fourth local identifier, that is, the updated local identifier. In this case, after receiving the second data packet, the remote terminal device may obtain the fourth configuration information based on the processing in S 1003, to complete the local identifier update. Alternatively, because the relay terminal device first completes the local identifier update, based on the process shown in FIG. 9c, the relay terminal device may store both old and new configuration information, and forward, based on the old configuration information, the second data packet carrying the fourth configuration information. In this case, the local identifier carried in the second data packet is the third local identifier, so that the remote terminal device can obtain the fourth configuration information through parsing based on an existing implementation process, to complete the local identifier update. In other words, the third local identifier is updated to the fourth local identifier.

S33: The remote terminal device updates the third configuration information corresponding to the first identifier to the fourth configuration information.

For example, after receiving the fourth configuration information, the remote terminal device may determine the corresponding third configuration information based on the first identifier in the fourth configuration information, to replace the third configuration information corresponding to the first identifier with the fourth configuration information. In other words, the third configuration information in the current configuration is updated to the fourth configuration information, to complete the local identifier update.

Therefore, after completing the local identifier update based on S32 and S33, the remote terminal device may process, based on the updated fourth configuration information, the prestored and subsequently received second data packet. For example, before the remote terminal device completes the local identifier update, the stored second data packet is a data packet 3, and after the remote terminal device completes the local identifier update, the received second data packet is a data packet 4. In this case, the remote terminal device separately performs matching processing on the data packet 3 and the data packet 4 based on the fourth configuration information, for example, determines whether a local identifier and a radio bearer identifier that are carried in the data packet 3 are consistent with the local identifier and the radio bearer identifier that are in the fourth configuration information (that is, error handling). If the local identifier and the radio bearer identifier that are carried in the data packet 3 are consistent with the local identifier and the radio bearer identifier that are in the fourth configuration information, the remote terminal device continues to parse the data packet 3, to obtain data carried in the data packet 3. If the local identifier and the radio bearer identifier that are carried in the data packet 3 are inconsistent with the local identifier and the radio bearer identifier that are in the fourth configuration information, the remote terminal device discards the data packet 3.

After the remote terminal device completes the local identifier update based on S32 and S33, as shown in FIG. 10b, the communication method provided in this embodiment of this application may further include the following steps.

S34: The remote terminal device sends the fourth indication information to the relay terminal device. Correspondingly, the relay terminal device receives the fourth indication information from the remote terminal device.

The fourth indication information indicates that the remote terminal device has completed the local identifier update. For example, the remote terminal device may notify, based on the fourth indication information, the relay terminal device that the remote terminal device completes the local identifier update. Optionally, the fourth indication information may further include the fourth local identifier, that is, the fourth indication information carries the updated local identifier. Optionally, the fourth indication information may further include the local identifier before the update, that is, the third local identifier.

It can be learned that, in the scenario shown in FIG. 10b, the remote terminal device triggers, based on S31, a start of the operation in S1003, and triggers, based on S33 or S34, a stop of the operation in S1003. In addition, the remote terminal device may alternatively start the operation in S903 and/or stop the operation in S1003 based on the following possible implementations. This is not specifically limited in embodiments of this application.

In a possible implementation, S31 may be replaced with the following: The network device sends a start indication to the remote terminal device. Correspondingly, the remote terminal device triggers, based on the received start indication, the start of the operation in S1003, and triggers the stop of the operation in S1003 after receiving the fourth configuration information, that is, after S32 is performed.

In another possible implementation, S31 may be replaced with the following: The remote terminal performs determining by itself based on an implementation. For example, when determining that the fourth local identifier in the second data packet is different from the third local identifier in the third configuration information, but another identifier like the radio bearer identifier, is the same as that in the first configuration, the remote terminal starts processing in S1003.

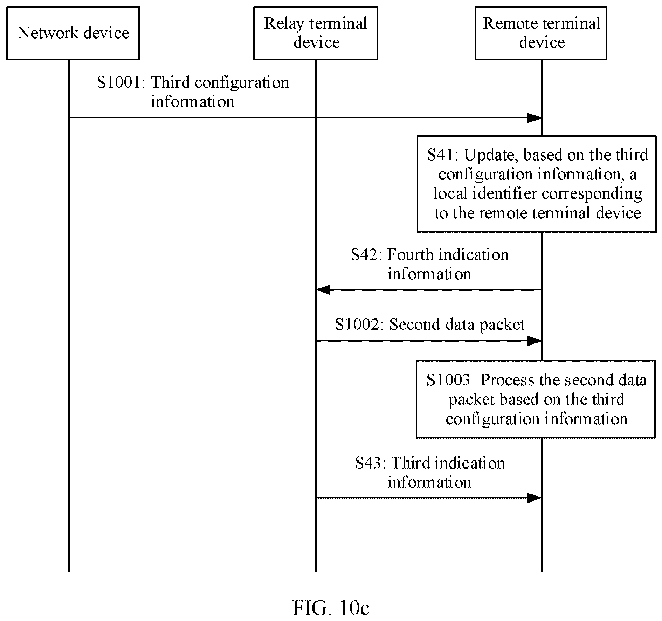

In another possible design solution, based on the scenarios in S1001 to S1003, before the remote terminal device receives the second data packet, as shown in FIG. 10c, the communication method provided in this embodiment of this application may further include the following steps.

S41: The remote terminal device updates, based on the third configuration information, the local identifier corresponding to the remote terminal device.

In other words, the third configuration information is the updated configuration information. For example, before the third configuration information is received, the configuration information corresponding to the first identifier in the remote terminal device is sixth configuration information, and the sixth configuration information includes the fourth local identifier and the first identifier. Therefore, after receiving the third configuration information, the remote terminal device replaces the sixth configuration information with the third configuration information, to update the local identifier, that is, update the fourth local identifier to the third local identifier. Further, after the remote terminal device completes the local identifier update, if the remote terminal device has not received update completion indication information sent by the relay terminal device, it may be considered that the relay terminal device has not completed the local identifier update. Therefore, before the relay terminal device completes the local identifier update, the remote terminal device performs S1003 on the second data packet from the relay terminal device until the remote terminal device receives updated indication information from the relay terminal device, for example, S43 below. In this scenario, the third local identifier is the updated local identifier, and the fourth local identifier is the local identifier before the update. In addition, in this scenario, the third configuration information is equivalent to the fourth configuration information in the scenario shown in FIG. 10b, and the sixth configuration information is equivalent to the third configuration information in the scenario shown in FIG. 10b.

Similar to the solution in the scenario described in S21, in a scenario in which the remote terminal device completes the local identifier update and the relay terminal device has not completed the local identifier update, in a possible design solution, S1003 may be replaced with the following: The remote terminal device may alternatively store old configuration information (that is, the sixth configuration information) when updating the configuration information, to process, based on the old configuration information, the second data packet received from the relay terminal device. For example, the remote terminal device processes the second data packet from the relay terminal device based on the sixth configuration information. In this case, the local identifier carried in the second data packet is also the fourth local identifier. Therefore, the remote terminal device may select, based on the local identifier carried in the second data packet, the sixth configuration information for processing, to obtain the data carried in the second data packet. In this scenario, the remote terminal device may alternatively send the first data packet to the relay terminal device based on the stored old configuration information. For example, the remote terminal device sends the first data packet to the relay terminal device based on the sixth configuration information, and correspondingly, the relay terminal device receives the first data packet from the remote terminal device. In this case, the local identifier carried in the first data packet is the fourth local identifier (that is, an old local identifier).

When the remote terminal device is configured to store both old and new of configuration information (that is, store both the third configuration information and the sixth configuration information), in a possible design solution, S1003 may be replaced with the following: The remote terminal device may process the second data packet from the relay terminal device based on the third configuration information or the sixth configuration information. For a specific implementation process, refer to related descriptions of processing, by the relay terminal device, the first data packet from the remote terminal device based on the first configuration information or the fifth configuration information in S21. Details are not described herein again. In this scenario, the remote terminal device may alternatively not determine whether the relay terminal device has completed the local identifier update.

In this scenario, the remote terminal device may alternatively receive and send the data based on both the old and new configuration information within preset duration after receiving the third configuration information. For example, the remote terminal device starts a second timer based on the third configuration information, and processes the second data packet from the relay terminal device within second timing duration of the second timer based on the third configuration information or the sixth configuration information. In other words, after receiving the updated configuration information (that is, the third configuration information), the remote terminal device starts the second timer to perform timing. Within the second timing duration, the remote terminal device may process the received data packet based on both the old and new configuration information. In a possible case, the remote terminal device may alternatively start the second timer after completing the update of the configuration information, for example, when sending the updated indication (that is, the fourth indication information) to the relay terminal device. A start moment of the second timer is not specifically limited in embodiments of this application. For another example, the remote terminal device sends the first data packet to the relay terminal device within the second timing duration based on the third configuration information or the sixth configuration information.

In this embodiment of this application, the second timing duration may be duration preset by the remote terminal device, or may be duration configured by the network device for the remote terminal device, or may be duration negotiated by the relay terminal device and the remote terminal device. This is not specifically limited in embodiments of this application. The second timing duration may be determined based on information like an updated time difference between the relay terminal device and the remote terminal device, a processing capability of the relay terminal device, and a processing capability of the remote terminal device. This is not specifically limited in embodiments of this application.

Further, after the remote terminal device completes the local identifier update, as shown in FIG. 10c, the communication method provided in this embodiment of this application may further include the following steps.

S42: The remote terminal device sends the fourth indication information to the relay terminal device. Correspondingly, the relay terminal device receives the fourth indication information from the remote terminal device.

The fourth indication information indicates that the remote terminal device has completed the local identifier update. For example, the remote terminal device may notify, based on the fourth indication information, the relay terminal device that the remote terminal device completes the local identifier update based on the third configuration information. Optionally, the fourth indication information may further include the third local identifier, that is, the fourth indication information carries the updated local identifier. Optionally, the fourth indication information may further include the local identifier before the update, that is, the fourth local identifier.

S43: The relay terminal device sends the third indication information to the remote terminal device. Correspondingly, the remote terminal device receives the third indication information from the relay terminal device.

The third indication information indicates that the relay terminal device has completed the local identifier update. Optionally, the third indication information carries the updated local identifier of the relay terminal device, that is, the third local identifier.

Further, after determining, based on the third indication information, that the relay terminal device has completed the update, the remote terminal device may not perform S1003 on the second data packet that is subsequently received from the relay terminal device. The remote terminal device matches the local identifier and the radio bearer identifier that are in the received data packet with the third local identifier and the radio bearer identifier that are in the third configuration information, performs error handling, and may continue to parse the data packet to obtain the data carried in the data packet when the local identifier and the radio bearer identifier that are in the received data packet are matched with the third local identifier and the radio bearer identifier that are in the third configuration information. For example, the relay terminal device stops, based on the third indication information, processing the second data packet based on the third configuration information. In this case, stopping processing the second data packet based on the third configuration information indicates stopping performing the processing operation in S903, and processing, based on the third configuration information by using an existing error matching process, the second data packet received after both the relay terminal device and the remote terminal device complete the updates of the local identities. In this case, the second data packet is a data packet sent by the relay terminal device after the relay terminal device updates the local identifier.

In addition, the remote terminal device may alternatively send the data packet to the relay terminal device based on the third configuration information. In this case, the data packet carries the third local identifier, and the relay terminal device forwards the data packet to the network device.

When the remote terminal device stores both the old and new of configuration information (that is, stores both the third configuration information and the sixth configuration information), after receiving the third indication information, the remote terminal device may release the old configuration information based on the third indication information. For example, after receiving the third indication information, the remote terminal device releases the sixth configuration information. Alternatively, the remote terminal device releases the sixth configuration information when the second timer reaches the second timing duration (that is, an end moment of the second timing duration).

According to the communication method shown in FIG. 10b or FIG. 10c, regardless of whether the relay terminal device completes the local identifier update first or later, the remote terminal device can associate the received second data packet with the corresponding third configuration information to process the second data packet from the relay terminal device, to avoid a data packet loss caused by asynchronous updates of the local identities of the remote terminal device and the relay terminal device, and an update failure of the local identifier of the remote terminal device, thereby improving data transmission reliability.

It should be understood that, after updating the local identities, the remote terminal device and the relay terminal device send corresponding update complete messages to the network device, for example, reply, by using RRC reconfiguration complete messages, that the updates of the local identities are complete. In this way, the network device can send data to the remote terminal device based on the updated local identifier via the relay terminal device. Correspondingly, the remote terminal device can also send data to the network device based on the updated local identifier via the relay terminal device.

In addition, other than the communication methods shown in FIG. 9a to FIG. 9c and FIG. 10a to FIG. 10c, an embodiment of this application further provides a communication method, to avoid a data packet loss caused by asynchronous updates of local identities.

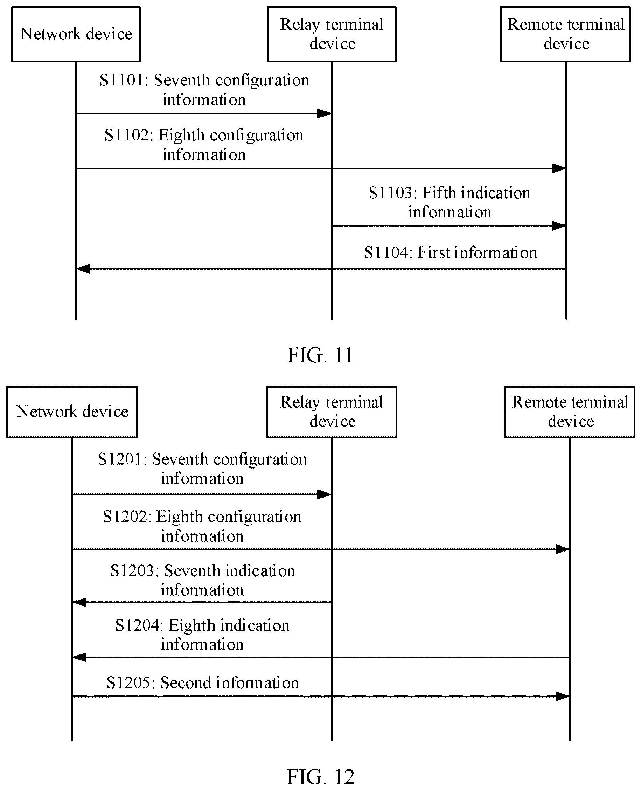

For example, FIG. 11 is a schematic flowchart of still another communication method according to an embodiment of this application. As shown in FIG. 11, the communication method includes the following steps.

S1101: A network device sends seventh configuration information to a relay terminal device. Correspondingly, the relay terminal device receives the seventh configuration information from the network device.

The seventh configuration information is used to configure the relay terminal device to receive and send data. The seventh configuration information includes a fifth local identifier and a first identifier. The fifth local identifier is an identifier that is allocated by the network device and that identifies a remote terminal device. For example, the local identifier is a local ID, and a value of the fifth local identifier is a local ID 1.

For example, after receiving the seventh configuration information, the relay terminal device replaces currently configured configuration information corresponding to the first identifier with the seventh configuration information, that is, updated configuration information corresponding to the first identifier is the seventh configuration information. It should be understood that the seventh configuration information may further include other information, like a radio bearer identifier corresponding to the remote terminal device and a mapping relationship between the radio bearer identifier and a Uu relay RLC channel or a PC5 relay RLC channel, that can be used by the relay terminal device to receive and send data transmitted between the remote terminal device and the network device. This is not specifically limited in embodiments of this application.

S1102: The network device sends eighth configuration information to the remote terminal device. Correspondingly, the remote terminal device receives the eighth configuration information from the network device.

The eighth configuration information is used to configure the remote terminal device to receive and send relay data, that is, is used to configure the remote terminal device to send data to the relay terminal device or receive data from the relay terminal device. The eighth configuration information includes the fifth local identifier and the first identifier. For example, the eighth configuration information is forwarded to the remote terminal device via the relay terminal device.

In a possible case, the relay terminal device first receives the seventh configuration information to complete an update of the configuration information, and the eighth configuration information is received from the network device and forwarded to the remote terminal device after the relay terminal device updates the configuration information. For example, the eighth configuration information is carried in a data packet, a local identifier carried in the data packet is an updated local identifier (that is, the fifth local identifier), the remote terminal device currently has not completed an update of configuration information, and a local identifier in configuration information corresponding to the current first identifier is a local identifier that is not updated. In this case, the remote terminal device may process the received data packet based on the processing operation in S1003, to obtain the updated configuration information (that is, the eighth configuration information), to complete the update of the configuration information. Alternatively, when determining that the remote terminal device has not completed the update, for example, when updating the configuration information in S21, the relay terminal device stores old configuration information, and forwards, based on the old configuration information, the data packet carrying the eighth configuration information to the remote terminal device, so that the remote terminal device can process the data packet based on configuration information that is not updated in a current configuration, to obtain the updated configuration information (that is, the eighth configuration information), thereby completing the update of the configuration information. This is not specifically limited in the example of this application.

It should be understood that the network device directly sends the updated configuration information to the remote terminal device and the relay terminal device. When the remote terminal device first completes the update of the configuration information, the update of the configuration information by the relay terminal device is not affected, but transmission of uplink and downlink user plane data is affected. In other words, a data packet loss is caused by asynchronous updates between the two ends. In this scenario, the remote terminal device and the relay terminal device update the configuration information based on an existing implementation.

Both the seventh configuration information and the eighth configuration information may be carried in RRC reconfiguration messages for sending. After completing the updates of the configuration information, the remote terminal device and the relay terminal device may send the RRC reconfiguration complete messages to the network device, to notify the network device that updates of configurations are completed.

S1103: The relay terminal device sends fifth indication information to the remote terminal device. Correspondingly, the remote terminal device receives the fifth indication information from the relay terminal device.

The fifth indication information indicates that the relay terminal device has completed the update of the configuration information. For example, after completing the update of the configuration information based on the seventh configuration information, the relay terminal device notifies, based on the fifth indication information, the remote terminal device that the relay terminal device has completed the update of the configuration information.

Optionally, the remote terminal device may alternatively send sixth indication information to the relay terminal device. The sixth indication information indicates that the remote terminal device has completed the update of the configuration information. It should be understood that a function of the fifth indication information is similar to a function of the foregoing first indication information and a function of the foregoing third indication information, and a function of the sixth indication information is similar to a function of the foregoing second indication information and a function of the foregoing fourth indication information. In a specific scenario, the first indication information, the third indication information, and the fifth indication information may be same indication information or may be different indication information; and the second indication information, the fourth indication information, and the sixth indication information may also be same indication information or may be different indication information. This is not specifically limited in embodiments of this application.

S1104: When the remote terminal device completes the update of the configuration information corresponding to the first identifier and determines that the relay terminal device completes the update of the configuration information corresponding to the first identifier, the remote terminal device sends first information to the network device. Correspondingly, the network device receives the first information from the remote terminal device.

The first information is used to trigger the network device to retransmit a lost downlink data packet.

For example, after updating the configuration information corresponding to the first identifier based on the eighth configuration information, the remote terminal device also determines, based on the received fifth indication information, that the relay terminal device completes the update of the configuration information corresponding to the first identifier, and sends the first information to the network device, to trigger the network device to retransmit the downlink data packet, for example, a data recovery procedure, lost during the update of the configuration. In other words, the remote terminal device first completes the update based on the configuration information, and may trigger sending of the first information when receiving an update complete indication (that is, the fifth indication information) of the relay terminal device. For another example, the remote terminal device first receives an update complete indication (that is, the fifth indication information) of the relay terminal device, and the remote terminal device may trigger sending of the first information when receiving the updated configuration information (that is, the updated eighth configuration information).

In this embodiment of this application, the first information may be a PDCP status report, and the PDCP status report includes a first missing COUNT (first missing COUNT, FMC), a bitmap (bitmap), and the like. The FMC indicates a sequence number/COUNT value of a first lost PDCP PDU to the network device, and the bitmap indicates a data receiving status, of the remote terminal device, starting from the first lost PDCP PDU. For example, if a bit in the bitmap is 0, it indicates that a PDCP PDU at a corresponding location is lost, and if a bit is 1, it indicates that a PDCP PDU at a corresponding location is successfully received. Therefore, the network device retransmits, based on the received PDCP status report, downlink data that is not successfully received by the remote terminal device, to ensure that the remote terminal device receives complete data.

According to the communication method shown in FIG. 11, after completing the update of the configuration information and determining that the relay terminal device completes the update of the configuration information, the remote terminal device can trigger, based on the first information, the network device to retransmit the downlink data packet that is lost because the remote terminal device and the relay terminal device are not synchronized in the configuration information, thereby ensuring integrity and reliability of downlink data transmission.

FIG. 11 shows that the remote terminal device triggers the network device to retransmit an uplink data packet that is lost because the remote terminal device and the relay terminal device are not synchronized in the configuration information. In addition, the network device can also trigger the remote terminal device to retransmit the downlink data packet that is lost because the remote terminal device and the relay terminal device are not synchronized in the configuration information.

For example, FIG. 12 is a schematic flowchart of still another communication method according to an embodiment of this application. As shown in FIG. 12, the communication method includes the following steps.

S1201: A network device sends seventh configuration information to a relay terminal device. Correspondingly, the relay terminal device receives the seventh configuration information from the network device.

S1202: The network device sends eighth configuration information to a remote terminal device. Correspondingly, the remote terminal device receives the eighth configuration information from the network device.

For specific implementation processes of S1201 and S1202, refer to related descriptions in S1101 and S1102. Details are not described herein again.

S1203: The relay terminal device sends seventh indication information to the network device. Correspondingly, the network device receives the seventh indication information from the relay terminal device.

The seventh indication information indicates that the relay terminal device has completed an update of configuration information. Optionally, the seventh indication information may be carried in an RRC reconfiguration complete message.

Optionally, the relay terminal device may also send indication information to the remote terminal device, for example, the fifth indication information in S1103, to notify the remote terminal device that the relay terminal device has completed the update of the configuration information.

S1204: The remote terminal device sends eighth indication information to the network device. Correspondingly, the network device receives the eighth indication information from the remote terminal device.

The eighth indication information indicates that the remote terminal device has completed an update of configuration information. Optionally, the eighth indication information may also be carried in an RRC reconfiguration complete message.

Optionally, the remote terminal device may alternatively send indication information to the relay terminal device, for example, the sixth indication information in S1103, to notify the relay terminal device that the remote terminal device has completed the update of the configuration information.

S1205: The network device sends second information to the remote terminal device. Correspondingly, the remote terminal device receives the second information from the network device.

For example, the network device may determine, based on the received seventh indication information, that the relay terminal device completes the update of the configuration information, and determine, based on the eighth indication information, that the remote terminal device completes the update of the configuration information. In other words, the network device determines that the relay terminal device completes an update of configuration information corresponding to a first identifier, and determines that the remote terminal device completes an update of configuration information corresponding to the first identifier, to send the second information to the remote terminal device to trigger the remote terminal device to retransmit a lost uplink data packet.

The second information is used to trigger the remote terminal device to retransmit the lost uplink data packet. Similar to the first information in S1104, the second information may also be a PDCP status report, and the PDCP status report includes a first missing COUNT (first missing COUNT, FMC), a bitmap (bitmap), and the like. The FMC indicates a sequence number/COUNT value of a first lost PDCP PDU to the remote terminal device, and the bitmap indicates a data receiving status, of the network device, starting from the first lost PDCP PDU. For example, if a bit in the bitmap is 0, it indicates that a PDCP PDU at a corresponding location is lost, and if a bit is 1, it indicates that a PDCP PDU at a corresponding location is successfully received. Therefore, the remote terminal device retransmits, based on the received PDCP status report, downlink data that is not successfully received by the network device, to ensure that the network device receives complete data.

In another possible implementation, the network device shown in FIG. 12 sends the indication information to the remote terminal device to trigger the remote terminal device to send the PDCP status report, to indicate a data receiving status of the remote terminal device. After receiving the indication information of the network device, the remote terminal device triggers sending of the PDCP status report to the network device. In this case, the remote terminal device may not need to determine, based on an indication of the relay terminal device, whether the relay terminal device completes the update of the configuration information.

According to the communication method shown in FIG. 12, when determining that both the remote terminal device and the relay terminal device have completed the updates of the configuration information, the network device may trigger the remote terminal device to retransmit the uplink data packet that is lost because the remote terminal device and the relay terminal device are not synchronized in the configuration information, thereby ensuring the integrity and reliability of uplink data transmission.

It should be noted that the update of the configuration information in FIG. 11 and FIG. 12 is the local identifier update of the remote terminal device.

In addition, other than the retransmission triggering solutions shown in FIG. 11 and FIG. 12, in a possible implementation, the network device may interrupt the data transmission when determining that the local identities of the remote terminal device and the relay terminal device need to be updated, and resume the data transmission after both the remote terminal device and the relay terminal device complete the updates of the local identities. For example, in downlink transmission, after determining that the local identities are updated, the network device may interrupt the data transmission, and resume the downlink data transmission after both the remote terminal device and the relay terminal device complete the updates of the local identities based on the configuration information. In the uplink transmission, the network device may indicate the remote terminal device to interrupt the data transmission, and indicate resumption of the uplink data transmission after both the remote terminal device and the relay terminal device complete the updates of the local identities based on the configuration information. Alternatively, the remote terminal device triggers resumption of the data transmission based on a local identifier update complete indication or a local identifier update indication. For example, if the remote terminal device first updates the local identifier, the remote terminal device may trigger the resumption of the data transmission after receiving the update complete indication of the relay terminal device. If the relay terminal device first updates the local identifier, the remote terminal device resumes the data transmission after receiving the configuration information that is of the network device and that is used to update the local identifier.

In addition, in a scenario in which data is forwarded between the remote terminal device and the network device via a plurality of relay terminal devices, when updating local identities for the remote terminal device and the plurality of relay terminal devices, the network device may configure the relay terminal devices between the remote terminal device and the network device in an order that starts from the remote terminal device and that is from far to near.

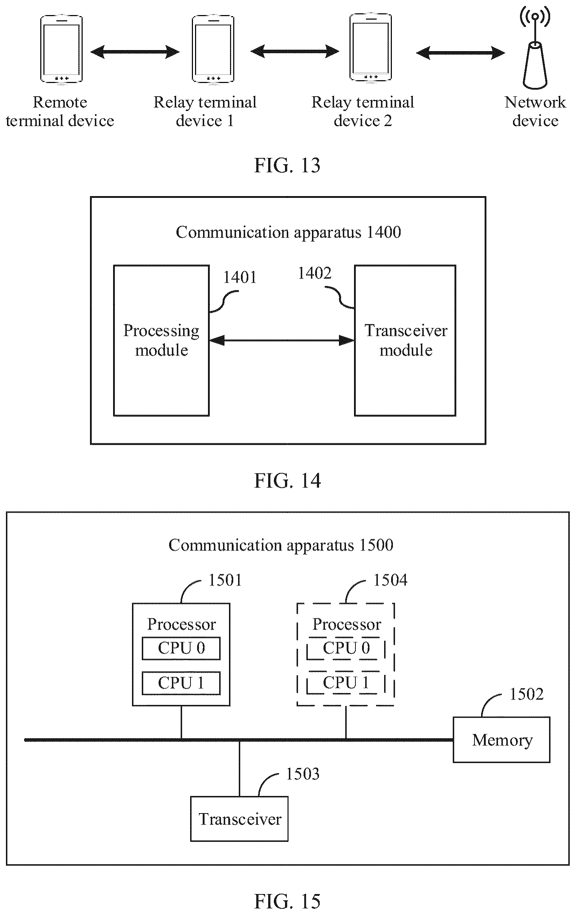

As shown in FIG. 13, there are two relay terminal devices between the remote terminal device and the network device, that is, a relay terminal device 1 and a relay terminal device 2. The remote terminal device sequentially communicates with the network device via the relay terminal device 1 and the relay terminal device 2. A local identifier before an update is a local ID 1, and a local identifier after the update is a local ID 2. In view of this, the network device preferentially sends an RRC reconfiguration message to the remote terminal device. The RRC reconfiguration message includes updated configuration information, and the updated configuration information includes the local ID 2. Therefore, after completing the local identifier update based on the updated configuration information, the remote terminal device replies with an RRC reconfiguration complete message based on the local identifier (that is, the local ID 1) before the update. In other words, a data packet carrying the RRC reconfiguration complete message carries the local ID 1. The relay terminal device 1 and the relay terminal device 2 may sequentially forward, to the network device based on the local identifier (that is, the local ID 1) that is not updated currently, the data packet carrying the RRC reconfiguration complete message. In this way, after determining that the remote terminal device completes the update, the network device sends, to the relay terminal device, the RRC reconfiguration message carrying the updated configuration information. Correspondingly, after updating the local identifier based on the updated configuration information, the relay terminal device 1 replies with the RRC reconfiguration complete message based on the local identifier (that is, the local ID 1) before the update. The RRC reconfiguration complete message is also carried in the data packet for sending, and the data packet carrying the RRC reconfiguration complete message carries the local ID 1. Therefore, the relay terminal device 2 may forward, to the network device based on the local identifier (that is, the local ID 1) that is not updated currently, the data packet carrying the RRC reconfiguration complete message. After determining that the relay terminal device 1 completes the local identifier update, the network device sends the updated configuration information to the relay terminal device 2. After completing the local identifier update, the relay terminal device 2 may reply with the RRC reconfiguration complete message based on the local identifier (that is, the local ID 1) before the update, or may reply with the RRC reconfiguration complete message based on the updated local identifier (that is, the local ID 2). Therefore, the network device updates local identities of relay terminal devices, starting from the remote terminal device and proceeding from far to near, to implement a configuration update in a multi-hop SL relay scenario.

The foregoing method embodiments show processes in which the remote UE, the relay UE, and the base station implement data transmission through bearer multiplexing. In addition, an embodiment of this application provides a communication method for how to enable uplink and downlink data transmission of remote UE on an indirect link when bearer multiplexing is not applied to the remote UE, the relay UE, and the base station shown in (b) in FIG. 6. The communication method includes the following steps.

Step 1: A network device sends third information to a relay terminal device. Correspondingly, the relay terminal device receives the third configuration information from the network device. The third information includes a configuration of a first bearer, the first bearer is a bearer between the relay terminal device and the network device, and is used to carry data of a radio bearer of a remote terminal device, and the third information includes an identifier of the first bearer. For example, the first bearer may be an RLC bearer (RLC bearer) or a radio bearer (radio bearer).

For example, the third information is used to configure, for the relay terminal device, a radio link control bearer (RLC bearer) carrying the data of the radio bearer (radio bearer) of the remote terminal device. One radio link control bearer corresponds to one logical channel. For example, the network device may indicate a corresponding RLC bearer identifier by delivering a radio link control bearer identifier (that is, the third information includes the radio link control bearer identifier). For example, the network device configures an RLC bearer ID 1 for the relay terminal device, to notify the relay terminal device of a radio link control bearer used to carry data of a radio bearer of the remote terminal device. In other words, the relay terminal device may determine an RLC bearer 1 based on the RLC bearer ID 1, and the RLC bearer 1 is used to carry data of the radio bearer 1 of the remote terminal device.

Step 2: The network device sends fourth information to the remote terminal device. Correspondingly, the remote terminal device receives the fourth information from the network device. The fourth information indicates a correspondence between the first bearer and a second bearer of the remote terminal device. The correspondence is determined by the network device. The second bearer is an end-to-end bearer between the remote terminal device and the network device. For example, the fourth information may include an identifier of an RLC bearer (RLC bearer) or radio bearer (radio bearer), and an identifier of the second bearer. Optionally, the fourth information may further include a resource configuration of the second bearer.

For example, if the first bearer is the RLC bearer, the fourth information is used to configure the remote terminal device to receive and send data from the relay terminal device, and the fourth information includes a mapping relationship between an RLC bearer ID (for example, a logical channel identifier (LCID) corresponding to the RLC bearer) of the relay terminal device and an end-to-end radio bearer of the remote terminal device. The logical channel identifier is used to identify the radio link control bearer of the relay terminal device, and one logical channel identifier corresponds to one end-to-end radio bearer and one radio link control bearer. Therefore, the remote terminal device may determine, based on the logical channel identifier in the fourth information, a radio link control bearer of the relay terminal device that is used to carry data of a specific end-to-end radio bearer of the remote terminal device. For example, if the network device configures, based on the fourth information, that a radio bearer 1 of the remote terminal device corresponds to an LCID 1, the remote terminal device may determine, based on the LCID 1, the RLC bearer that is of the relay terminal device and that is used to carry the data of the end-to-end radio bearer of the remote terminal device, or the RLC bearer ID of the remote terminal device. For example, the LCID 1 corresponds to the RLC bearer 1. In this way, the remote terminal device can be enabled to receive and send the data on the indirect link.

For example, uplink transmission is used as an example. An upper layer of the remote terminal device generates first data, and sends, based on the mapping relationship between the first bearer and the second bearer of the remote terminal in the fourth information, first data and a first bearer identifier corresponding to the second bearer to the relay terminal device through a link between the remote terminal device and the relay terminal device. In an example, the first data is carried in an IP packet to be sent to the relay terminal device through the link between the remote terminal and the relay terminal, and a packet header of the IP packet corresponding to the first data may carry the first bearer identifier.

Correspondingly, the relay terminal device receives the first data, and may be used to carry, based on the first bearer identifier corresponding to the first data, the first bearer corresponding to the first data, and submit the first data to the network device based on the first bearer.

Correspondingly, after receiving the first data from the first bearer, the network device submits, based on the radio bearer (for example, the radio bearer 1) that is of the remote terminal device and that corresponds to the first bearer, the first data to the corresponding upper layer for processing. It should be understood that a downlink transmission process corresponds to the uplink transmission process. Details are not described herein again.

For example, when the upper layer is a PDCP layer, the transmitted data (for example, the first data) is a PDCP PDU, the first bearer is an RLC bearer, the first bearer identifier is an LCID corresponding to the RLC bearer, the link between the remote terminal and the relay terminal is a non-3GPP link, and uplink and downlink transmission processes are separately as follows:

In the uplink transmission process, a PDCP layer of the remote terminal device performs data processing (like encryption and integrity protection) on the radio bearer 1 that needs to be sent, to generate a PDCP PDU 1, and sends, to the relay terminal device through the non-3GPP link, the PDCP PDU 1 and the LCID 1 that corresponds to the radio link control bearer corresponding to the data of the identifier bearer radio bearer 1. For example, the PDCP PDU 1 is sent to the relay terminal device in an IP packet through the non-3GPP link, and a packet header of the IP packet corresponding to the PDCP PDU may carry the LCID (for example, the LCID 1). Therefore, after receiving the IP packet, the relay terminal device may determine, based on the LCID 1 in the IP packet, a radio link control bearer used to carry data of a radio bearer corresponding to the PDCP PDU 1. For example, the LCID 1 corresponds to the RLC bearer 1, and the relay terminal device submits the PDCP PDU 1 to the RLC bearer 1 for processing. Correspondingly, after receiving the PDCP PDU 1 from the RLC bearer 1, the network device submits, based on the radio bearer (for example, the radio bearer 1) that is of the remote terminal device and that corresponds to the RLC bearer 1, the PDCP PDU 1 to a corresponding PDCP entity for processing.

In the downlink transmission process, a PDCP layer of the network device processes the data of the radio bearer 1 that needs to be sent to the remote terminal device, to generate a PDCP PDU 2, and submits the PDCP PDU 2 to the radio link control bearer (for example, the RLC bearer 1) corresponding to the relay terminal device. After receiving the PDCP PDU 2, the relay terminal device sends, to the remote terminal device through the non-3GPP link, the PDCP PDU 2 and an LCID (for example, the LCID 1) that corresponds to data of a radio bearer corresponding to the PDCP PDU 2. Therefore, the remote terminal device determines the corresponding radio bearer (for example, the radio bearer 1) based on the received LCID 1 and the mapping relationship between the logical channel identifier (LCID) of the relay terminal device and the end-to-end radio bearer of the remote terminal device, and submits the PDCP PDU 2 to a PDCP entity corresponding to the radio bearer 1 for processing.

It may be understood that, in the foregoing embodiments, the method and/or the steps implemented by the remote terminal device may alternatively be implemented by a component (for example, a processor, a chip, a chip system, a circuit, a logical module, or software) that may be used in the remote terminal device. The method and/or steps implemented by the relay terminal device may alternatively be implemented by a component (for example, a processor, a chip, a chip system, a circuit, a logical module, or software) that may be used in the relay terminal device. The method and/or steps implemented by the network device may alternatively be implemented by a component (for example, a processor, a chip, a chip system, a circuit, a logical module, or software) that may be used in the network device.

The foregoing mainly describes the solutions provided in this application. Correspondingly, this application further provides a communication apparatus. The communication apparatus is configured to implement various methods in the foregoing method embodiments. The communication apparatus may be the remote terminal device in the foregoing method embodiments, or an apparatus including the remote terminal device, or a component that can be used in the remote terminal device, for example, a chip or a chip system. Alternatively, the communication apparatus may be the relay terminal device in the foregoing method embodiments, or an apparatus including the relay terminal device, or a component that can be used in the relay terminal device, for example, a chip or a chip system. Alternatively, the communication apparatus may be the network device in the foregoing method embodiments, or an apparatus including the network device, or a component that can be used in the network device, for example, a chip or a chip system.

It may be understood that, to implement the foregoing functions, the communication apparatus includes hardware structures and/or software modules for performing corresponding functions. A person skilled in the art should be easily aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, functional modules may be obtained through division based on corresponding functions, or two or more functions may be integrated into one processing module. The integrated module may be implemented in a form of hardware, or may be implemented in a form of a software function module. It should be noted that, in embodiments of this application, the module division is used as an example, and is merely logical function division. In actual implementation, another division manner may be used.

For example, the communication apparatus is the remote terminal device, the relay terminal device, or the network device in the foregoing method embodiments. FIG. 14 is a diagram of a structure of a communication apparatus according to an embodiment of this application. As shown in FIG. 14, the communication apparatus 1400 includes a processing module 1401 and a transceiver module 1402. The processing module 1401 is configured to perform a processing function of the remote terminal device, the relay terminal device, or the network device in the foregoing embodiments. The transceiver module 1402 is configured to perform a receiving and sending function of the remote terminal device, the relay terminal device, or the network device in the foregoing embodiments.

All related content of the steps in the foregoing method embodiments may be cited in function descriptions of the corresponding functional modules. Details are not described herein again.

Because the communication apparatus 1400 provided in this embodiment may perform the foregoing communication method, for technical effect that can be achieved by the communication apparatus 1400, refer to the foregoing method embodiments. Details are not described herein again.

In a possible design solution, in this embodiment of this application, the transceiver module 1402 may include a receiving module and a sending module (not shown in FIG. 14). The transceiver module is configured to implement a sending function and a receiving function of the communication apparatus 1400.

In a possible design solution, the communication apparatus 1400 may further include a storage module (not shown in FIG. 14). The storage module stores a program or instructions. When the processing module 1401 executes the program or the instruction, the communication apparatus 1400 may perform a function of the remote terminal device, the relay terminal device, or the network device in the communication method shown in any one of FIG. 9a to FIG. 12.

It should be understood that the processing module 1401 in the communication apparatus 1400 may be implemented by a processor or a processor-related circuit component, and may be a processor or a processing unit; and the transceiver module 1402 may be implemented by a transceiver or a transceiver-related circuit component, and may be a transceiver or a transceiver unit.

For example, FIG. 15 is a diagram of a structure of another communication apparatus according to an embodiment of this application. The communication apparatus may be a remote terminal device, a relay terminal device, or a network device, or may be a chip (system) or another component or component that may be disposed in the remote terminal device, the relay terminal device, or the network device. As shown in FIG. 15, the communication apparatus 1500 may include a processor 1501. In a possible design solution, the communication apparatus 1500 may further include a memory 1502 and/or a transceiver 1503. The processor 1501 is coupled to the memory 1502 and the transceiver 1503. For example, the processor 1501 may be connected to the memory 1502 and the transceiver 1503 through a communication bus.

The parts of the communication apparatus 1500 are described below in detail with reference to FIG. 15.

The processor 1501 is a control center of the communication apparatus 1500, and may be one processor, or may be a collective term of a plurality of processing elements. For example, the processor 1501 is one or more central processing units (central processing unit, CPU), or may be an application-specific integrated circuit (application-specific integrated circuit, ASIC), or may be one or more integrated circuits configured to implement embodiments of this application, for example, one or more microprocessors (digital signal processor, DSP), or one or more field programmable gate arrays (field programmable gate array, FPGA).

In a possible design solution, the processor 1501 may perform various functions of the communication apparatus 1500 by running or executing a software program stored in the memory 1502 and invoking data stored in the memory 1502.

In a specific implementation, in an embodiment, the processor 1501 may include one or more CPUs, for example, a CPU 0 and a CPU 1 shown in FIG. 15.

In a specific implementation, in an embodiment, the communication apparatus 1500 may alternatively include a plurality of processors, for example, the processor 1501 and a processor 1504 shown in FIG. 15. Each of the processors may be a single-core processor (single-CPU) or a multi-core processor (multi-CPU). The processor herein may be one or more devices, circuits, and/or processing cores configured to process data (for example, computer program instructions).

The memory 1502 is configured to store the software program for performing the solutions in this application, and the processor 1501 controls execution of the software program. For a specific implementation, refer to the foregoing method embodiments. Details are not described herein again.

In a possible design solution, the memory 1502 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of instruction or data structure and that can be accessed by a computer. However, this is not limited thereto. The memory 1502 may be integrated with the processor 1501, or may exist independently, and is coupled to the processor 1501 through an interface circuit port (not shown in FIG. 15) of the communication apparatus 1500. This is not specifically limited in embodiments of this application.

The transceiver 1503 is configured to communicate with another communication apparatus. For example, the communication apparatus 1500 is a terminal device, and the transceiver 1503 may be configured to communicate with a network device or communicate with another terminal device. For another example, the communication apparatus 1500 is a network device, and the transceiver 1503 may be configured to communicate with a terminal device or communicate with another network device.

In a possible design solution, the transceiver 1503 may include a receiver and a transmitter (not separately shown in FIG. 15). The receiver is configured to implement a receiving function, and the transmitter is configured to implement a sending function.

In a possible design solution, the transceiver 1503 may be integrated with the processor 1501; or may exist independently, and is coupled to the processor 1501 through the interface circuit (not shown in FIG. 15) of the communication apparatus 1500. This is not specifically limited in embodiments of this application.

It should be noted that the structure of the communication apparatus 1500 shown in FIG. 15 does not constitute a limitation on the communication apparatus. An actual communication apparatus may include more or fewer components than those shown in the figure, or combine some components, or have different component arrangements.

In addition, for technical effect of the communication apparatus 1500, refer to technical effect of the communication method in the foregoing method embodiments. Details are not described herein again.

An embodiment of this application further provides a computer-readable storage medium. The computer-readable storage medium stores a computer program or instructions. When the computer program or the instructions are executed by a computer, functions of the foregoing method embodiments are implemented.

An embodiment of this application further provides a computer program product. When the computer program product is executed by a computer, functions of the foregoing method embodiments are implemented.

All or some of foregoing embodiments may be implemented by using software, hardware, firmware, or any combination thereof. When a software program is used to implement embodiments, all or a part of embodiments may be implemented in a form of a computer program product. The computer program product includes one or more computer instructions. When the computer program instructions are loaded and executed on a computer, the procedures or functions according to embodiments of this application are completely or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed systems, apparatuses, and methods may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium, for example, a USB flash drive, a removable hard disk, a read-only memory (read-only memory, ROM), a random access memory (random access memory, RAM), a magnetic disk, an optical disc, or the like that can store program code.

Although this application is described with reference to embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of "a plurality of". A single processor or another unit may implement several functions enumerated in the claims. Some measures are recorded in dependent claims that are different from each other, but this does not mean that these measures cannot be combined to produce better effect.

Although this application is described with reference to specific features and embodiments thereof, it is clearly that various modifications and combinations may be made to them without departing from the scope of this application. Correspondingly, the specification and accompanying drawings are merely example description of this application defined by the appended claims, and are considered as any of and all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, wherein the method comprises:
receiving, by a relay terminal device, first configuration information from a network device, wherein the first configuration information comprises a first local identifier and a first identifier, the first local identifier is an identifier that is allocated by the network device and that identifies a remote terminal device, the first identifier is an identifier that is allocated by the remote terminal device and that identifies the remote terminal device, and the remote terminal device communicates with the network device via the relay terminal device; and
receiving, by the relay terminal device, a first data packet from the remote terminal device based on the first identifier, and processing the first data packet based on the first configuration information, wherein the first data packet carries a second local identifier, and the second local identifier is an identifier that is configured by the network device for the remote terminal device and that identifies the remote terminal device.

2. The method according to claim 1, wherein processing, by the relay terminal device, the first data packet based on the first configuration information comprises:
replacing, by the relay terminal device, the second local identifier carried in the first data packet with the first local identifier, and performing error handling on the first data packet based on the first configuration information; or
replacing, by the relay terminal device, the first local identifier in the first configuration information with the second local identifier, and performing error handling on the first data packet based on the first configuration information.

3. The method according to claim 1 or 2, wherein processing, by the relay terminal device, the first data packet based on the first configuration information comprises:
forwarding, by the relay terminal device, the first data packet based on the first configuration information.

4. The method according to any one of claims 1 to 3, wherein the method further comprises:
receiving, by the relay terminal device, first indication information from the remote terminal device, wherein the first indication information indicates that the remote terminal device has completed a local identifier update.

5. The method according to claim 4, wherein the first indication information comprises the second local identifier.

6. The method according to claim 4 or 5, wherein processing, by the relay terminal device, the first data packet based on the first configuration information comprises:
after receiving the first indication information, processing, by the relay terminal device, the first data packet based on the first configuration information.

7. The method according to any one of claims 4 to 6, wherein the method further comprises:
receiving, by the relay terminal device, second configuration information from the network device, wherein the second configuration information comprises the second local identifier and the first identifier; and
sending, by the relay terminal device, second indication information to the remote terminal device based on the second configuration information, wherein the second indication information indicates that the relay terminal device has completed a local identifier update.

8. The method according to claim 7, wherein the second indication information comprises the second local identifier.

9. The method according to claim 7 or 8, wherein the method further comprises:
stopping, by the relay terminal device based on the second configuration information, an operation of processing the first data packet based on the first configuration information.

10. The method according to claim 4, wherein the method further comprises:
sending, by the relay terminal device, second indication information to the remote terminal device based on the first configuration information, wherein the second indication information indicates that the relay terminal device has completed a local identifier update.

11. The method according to claim 10, wherein the second indication information comprises the first local identifier.

12. The method according to claim 10 or 11, wherein the first indication information comprises the first local identifier.

13. The method according to any one of claims 10 to 12, wherein the method further comprises:
after receiving the first indication information, performing, by the relay terminal device, error handling and forwarding on the first data packet based on the first configuration information.

14. A communication method, wherein the method comprises:
receiving, by a remote terminal device, third configuration information from a network device, wherein the third configuration information comprises a third local identifier and a first identifier, the third local identifier is an identifier that is allocated by the network device and that identifies the remote terminal device, and the first identifier is an identifier that is allocated by the remote terminal device and that identifies the remote terminal device; and
receiving, by the remote terminal device, a second data packet from a relay terminal device, and processing the second data packet based on the third configuration information, wherein the second data packet carries a fourth local identifier, the fourth local identifier is an identifier that is configured by the network device for the relay terminal device and that identifies the remote terminal device, and the remote terminal device communicates with the network device via the relay terminal device.

15. The method according to claim 14, wherein processing, by the remote terminal device, the second data packet based on the third configuration information comprises:
replacing, by the remote terminal device, the fourth local identifier carried in the second data packet with the third local identifier, and performing error handling on the second data packet based on the third configuration information; or
replacing, by the remote terminal device, the third local identifier in the third configuration information with the fourth local identifier, and performing error handling on the second data packet based on the third configuration information.

16. The method according to claim 14 or 15, wherein processing, by the remote terminal device, the second data packet based on the third configuration information comprises:
submitting, by the remote terminal device, the second data packet to an upper layer based on the third configuration information.

17. The method according to any one of claims 14 to 16, wherein the method further comprises:
receiving, by the remote terminal device, third indication information from the relay terminal device, wherein the third indication information indicates that the relay terminal device has completed a local identifier update.

18. The method according to claim 17, wherein the third indication information comprises the fourth local identifier.

19. The method according to claim 17 or 18, wherein processing, by the remote terminal device, the second data packet based on the third configuration information comprises:
after receiving the third indication information, processing, by the remote terminal device, the second data packet based on the third configuration information.

20. The method according to any one of claims 17 to 19, wherein the method further comprises:
receiving, by the remote terminal device, fourth configuration information from the network device, wherein the fourth configuration information comprises the fourth local identifier and the first identifier; and
sending, by the remote terminal device, fourth indication information to the relay terminal device based on the fourth configuration information, wherein the fourth indication information indicates that the remote terminal device has completed a local identifier update.

21. The method according to claim 20, wherein the fourth indication information comprises the fourth local identifier.

22. The method according to claim 20 or 21, wherein the method further comprises:
stopping, by the remote terminal device based on the fourth configuration information, an operation of processing the second data packet based on the third configuration information.

23. The method according to claim 17, wherein the method further comprises:
sending, by the remote terminal device, fourth indication information to the relay terminal device based on the third configuration information, wherein the fourth indication information indicates that the remote terminal device has completed a local identifier update.

24. The method according to claim 23, wherein the fourth indication information comprises the third local identifier.

25. The method according to claim 23 or 24, wherein the third indication information comprises the third local identifier.

26. The method according to any one of claims 23 to 25, wherein the method further comprises:
after receiving the third indication information, performing, by the remote terminal device, error handling and forwarding on the second data packet based on the third configuration information.

27. A communication apparatus, wherein the apparatus comprises a processing module and a transceiver module, wherein
the processing module is configured to perform a processing function in the method according to any one of claims 1 to 26; and
the transceiver module is configured to perform sending and receiving functions in the method according to any one of claims 1 to 26.

28. A communication apparatus, comprising a processor, wherein
the processor is configured to: be coupled to a memory, and after reading instructions in the memory, perform the method according to any one of claims 1 to 26 according to the instructions.

29. A computer-readable storage medium, wherein the computer-readable storage medium stores a computer program or instructions, and when the computer program or the instructions are run on a computer, the computer is enabled to perform the method according to any one of claims 1 to 26.

30. A computer program product, wherein the computer program product comprises a computer program or instructions, and when the computer program or the instructions are run on a computer, the computer is enabled to perform the method according to any one of claims 1 to 26.
